# EUROPEAN PATENT APPLICATION

(11) **EP 4 482 113 A1**
(43) Date of publication of application: **25.12.2024**
(21) Application number: 23766120.2
(22) Date of filing: 10.03.2023
(51) Int. Cl.: H04L 45/50

(54) **INFORMATION PROCESSING METHOD, LABEL STACK GENERATION METHOD, NETWORK SIDE NODE, HEAD NODE, CONTROLLER, AND STORAGE MEDIUM**

(30) Priority: 11.03.2022 CN 202210242469
(71) Applicant: ZTE Corporation, Shenzhen, Guangdong 518057 (CN)
(72) Inventor: CHEN, Ran, Shenzhen, Guangdong 518057 (CN); QIAN, Yong, Shenzhen, Guangdong 518057 (CN); ZHAO, Detao, Shenzhen, Guangdong 518057 (CN)
(74) Representative: Canzler & Bergmeier Patentanwälte Partnerschaft mbB
(86) International application number: PCT/CN2023/080681
(87) International publication number: WO 2023/169543

(57) **Abstract**

The present disclosure provides an information processing method, used for a network side node. The method comprises: sending, by means of an extension protocol, to a target device, a primary message carrying node service-related information, the extension protocol being a protocol based on a routing protocol. The present disclosure further provides a method for generating a multi-purpose label stack, a network side node, a head node, a controller, and a computer readable storage medium.

## Description

### CROSS-REFERENCE TO RELATED APPLICATIONS

This application claims priority from Chinese patent application No. 202210242469.0 filed on March 11, 2022, the entirety of which is incorporated hereby by reference.

### TECHNICAL FIELD

The present disclosure relates to the field of communications, and specifically relates to an information processing method, a generation method for a multi-purpose label stack, a network node, a head node, a controller, and a computer-readable storage medium.

### BACKGROUND

In the multi-protocol label switching (MPLS) technology, packets with the same features are classified into a class called forwarding equivalence class (FEC). The packets belonging to the same FEC are processed in the same manner by a label switching router (LSR) during forwarding.

A label is a short and fixed-length identifier with merely local meanings and configured to uniquely identify a FEC to which a packet belongs. A label space refers to a value range of the label. Currently, 0 to 15 are assigned to special labels, in which only 4 to 6 and 8 to 12 remain unused. However, with the development of the communication technology, more and more applications are emerging, and the label space has become insufficient.

To solve this problem, a multi-purpose label and other solutions have been proposed. To put it another way, one special label is used to represent a multi-purpose capability or the existing special labels are multiplexed, and new bits are defined to identify the carried specific application information. For example, after one special label is used to represent a multi-purpose capability, flag bits are defined to identify the specific application which includes , but is not limited to, a slice, flow identification, an intent (delay, jitter, bandwidth, etc.), IOAM, coloring, application-related information, and the like; or an entropy label is used to multiplex the existing special labels, but TTL bits of the entropy label (EL instead of ELI) are defined to identify the carried specific application information. However, not all nodes in an MPLS network support these extended applications.

### SUMMARY

As a first aspect of the present disclosure, there is provided an information processing method applied to a network node, including: sending, through an extension protocol, a primary message carrying node service related information to a target device, wherein the extension protocol is a protocol based on a routing protocol.

As a second aspect of the present disclosure, there is provided an information processing method applied to a network node, including: receiving a primary message sent from a device other than a current node; and parsing the received primary message according to an extension protocol to obtain node service related information carried in the primary message, wherein the extension protocol is a protocol based on a routing protocol.

As a third aspect of the present disclosure, there is provided an information processing method applied to a controller, including: sending a target message carrying at least one piece of node service related information to at least one network node through a first extension protocol, wherein the first extension protocol is a protocol based on a first routing protocol.

As a fourth aspect of the present disclosure, there is provided a generation method for a multi-purpose label stack, which is applied to a head node in network nodes and includes : acquiring at least one piece of node service related information sent from an external device, wherein the external device includes at least one of a network node other than the head node or a controller; determining, according to the acquired node service related information, a position of the node service related information in the multi-purpose label stack, wherein the multi-purpose label stack is a label stack in which at least one type of service information is inserted; and generating the multi-purpose label stack.

As a fifth aspect of the present disclosure, there is provided a network node, including: a first storage module having a first computer-executable program stored thereon; and at least one first processor which, when calling the first computer-executable program, implements at least one of the information processing method according to the first or second aspect of the present disclosure.

As a sixth aspect of the present disclosure, there is provided a head node, including: a second storage module having a second computer-executable program stored thereon; and at least one second processor which, when calling the second computer-executable program, implements the generation method according to the fourth aspect of the present disclosure.

As a seventh aspect of the present disclosure, there is provided a controller, including: a third storage module having a third computer-executable program stored thereon; and at least one third processor which, when calling the third computer-executable program, implements the information processing method according to the third aspect of the present disclosure.

As an eighth aspect of the present disclosure, there is provided a computer-readable storage medium having a computer-executable program stored thereon which, when being called, causes any one of the above methods of the present disclosure to be implemented.

### BRIEF DESCRIPTION OF DRAWINGS

FIG. 1 is a flowchart of an implementation of an information processing method according to the present disclosure;
FIG. 2 is a schematic diagram showing a format of extended sub-TLVs in an extension protocol based on IGP according to the present disclosure;
FIG. 3 is a schematic diagram showing a format of an extended Prefix Attribute Flags TLV in an extension protocol based on an ISIS protocol according to the present disclosure;
FIG. 4 is a schematic diagram showing a format of extended OSPF v2/v3 variable length Prefix attributes Sub-TLVs in an extension protocol based on an OSPF protocol according to the present disclosure;
FIG. 5 is a schematic diagram showing a format of an extended Node MSD sub-TLV in an extension protocol based on IGP according to the present disclosure;
FIG. 6 is a schematic diagram showing an SRLD value, an FRLD value, an IRLD value and an IORLD value carried in the extended Node MSD sub-TLV according to the present disclosure;
FIG. 7 is a schematic diagram showing a format of an extended Prefix Attribute Flags TLV in an extension protocol based on a BGP-LS protocol according to the present disclosure;
FIG. 8 is a schematic diagram showing a format of an extended multi-purpose PCE capability sub-TLV in an extension protocol based on PCEP according to the present disclosure;
FIG. 9 is a schematic diagram showing a format of an extended LSP-EXTENDED-FLAG TLV in an extension protocol based on PCEP according to the present disclosure;
FIG. 10 is a flowchart of an implementation of an information processing method according to the present disclosure;
FIG. 11 is a schematic diagram of an implementation of operation S 110 in an information processing method according to the present disclosure;
FIG. 12 is a flowchart of an implementation of an information processing method according to the present disclosure;
FIG. 13 is a flowchart of an implementation of an information processing method according to the present disclosure;
FIG. 14 is a schematic diagram showing different flag bits in an extended SR-ERO object in an extension protocol based on PCEP according to the present disclosure;
FIG. 15 is a flowchart of an implementation of an information processing method according to the present disclosure;
FIG. 16 is a flowchart of an implementation of a generation method according to the present disclosure;
FIG. 17 is a schematic diagram of an implementation of operation S410 according to the present disclosure.
FIG. 18 is a flowchart of an implementation provided in First Example of the present disclosure;
FIG. 19 is a flowchart of an implementation provided in Second Example of the present disclosure;
FIG. 20 is a schematic diagram of a network architecture provided in Third Example of the present disclosure; and
FIG. 21 is a flowchart of an implementation provided in Third Example of the present disclosure.

### DETAIL DESCRIPTION OF EMBODIMENTS

To improve understanding of the technical solutions of the present disclosure for those skilled in the art, the information processing method, the generation method for a multi-purpose label, the network node, the head node, the controller, and the computer-readable storage medium provided in the present disclosure will be described in detail below in conjunction with the accompanying drawings.

Exemplary embodiments will be described more sufficiently below with reference to the accompanying drawings, but which may be embodied in different forms and the present disclosure should not be construed as limited to the embodiments set forth herein. These embodiments are provided so that the present disclosure will be thorough and complete, and will fully convey the scope the present disclosure to those skilled in the art.

The embodiments of the present disclosure and features thereof may be combined with each other as long as they are not contradictory.

As used herein, the term "and/or" includes any and all combinations of one or more of the associated listed items.

The terminology used herein is for the purpose of describing specific embodiments only, instead of limiting the present disclosure. As used herein, the singular forms "a", "an" and "the" include the plural forms as well, unless the context clearly indicates otherwise. It will be further understood that as used herein, the terms "comprise" and/or "consist of ..." specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the existing art and the present disclosure, and will not be interpreted in an idealized or overly formal sense unless expressly so defined herein.

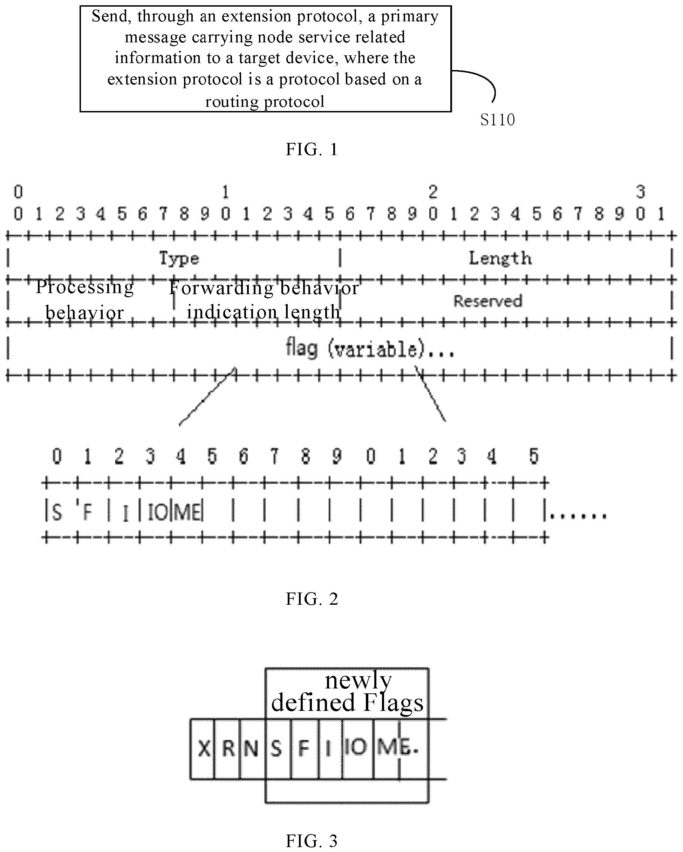

As a first aspect of the present disclosure, there is provided an information processing method applied to a network node, which, as shown in FIG. 1, includes the following operation S110.

At operation S 110, sending, through an extension protocol, a primary message carrying node service related information to a target device.

The extension protocol is a protocol based on a routing protocol.

It should be noted that the "node service related information" here refers to information associated with a service supported by a current node. In the present disclosure, the specific type and specific content of the node service related information are not particularly limited as long as the information can indicate the service supported by the current node and/or information associated with the service supported by the current node.

In the present disclosure, the extension protocol is an extended routing protocol. The node service related information of the current node is sent in a form of a message to the target device through the extended routing protocol, so that the advertisement of the node service related information between different nodes or between a node and the controller does not depend on the multi-purpose label any more, thereby solving the problem that the multi-purpose label technology is not supported in an MPLS network.

It should be noted that the network node may be a head node or an intermediate node. Accordingly, the target device may be a node (including a network node and a head node) other than the current node, or may be a controller. In other words, with the information processing method provided in the present disclosure, the network nodes may advertise their own node service related information to each other, or advertise their own node service related information to the controller.

In some implementations, the node service related information includes at least one of: node service capability related information or label depth information. The label depth information includes a readable label depth corresponding to each service capability supported by a current node, or the label depth information includes a readable depth of a multi-purpose label carrying various service capabilities supported by the current node. The node service capability information is configured to characterize an application or service supported by a node executing the information processing method.

After the primary message carrying node service related information is sent to the target device through the extension protocol, the target device can determine the service supported by the network node or the service capability of the network node. It should be noted that one node may support one or more service capabilities, and accordingly, one piece of node service related information may carry one or more types of node service capability related information. In this way, the advertisement of the node service capability is no longer dependent on the related multi-purpose label, thereby solving the problem that the multi-purpose label technology is not supported by some nodes in an MPLS network.

In the present disclosure, the node service capability related information includes at least one of: service capability identification information of at least one service supported by the current node, processing mode information of a service supported by the current node, or length information of service auxiliary data processable by the current node.

The processing mode information includes at least one of: discarding the received packet, uploading the received packet to a control plane, or skipping node service related information carried in the received packet.

In the present disclosure, the service capability supported by the node is not particularly limited. For example, the node may support a service including at least one of: a slice, a flow, an intent, inband operation administration and maintenance (IOAM) information, entropy label information, coloring information, or an application.

In the present disclosure, the intent may include at least one of delay information, jitter information, or bandwidth information.

When the node supports a slice, the service capability identification information may be slice identification information, and when the node supports a flow, the service capability identification information may be flow identification information, so on and so forth.

The extension protocol has an extension with respect to an underlying routing protocol. In some implementations, the node service related information may be identified by a flag bit of at least one preset position of a flag field in the extension of the extension protocol.

In some implementations, the at least one preset position includes at least one of a first preset position, a second preset position, a third preset position, a fourth preset position, a fifth preset position, a sixth preset position, or a seventh preset position; information of the first preset position is configured to identify whether the node supports a slice capability; information of the second preset position is configured to identify whether the node supports a flow identification capability; information of the third preset position is configured to identify whether the node supports an intent capability; information of the fourth preset position is configured to identify whether the node supports IOAM information; information of the fifth preset position is configured to identify whether the node supports coloring information; information of the sixth preset position is configured to identify whether the node supports a multi-purpose entropy label capability; and information of the seventh preset position is configured to identify whether the node supports application information.

For ease of understanding and description, the flag bit of the first preset position may be referred to as Flag S, the flag bit of the second preset position may be referred to as Flag F, the flag bit of the third preset position may be referred to as Flag I, the flag bit of the fourth or fifth preset position may be referred to as Flag IO, and the flag bit of the sixth preset position may be referred to as Flag ME.

The label depth information will be described in detail below, and details are not described here.

In the present disclosure, the type of the routing protocol, and how to extend the routing protocol, are not particularly limited. As described above, the target device may be a node other than the current node, or may be a controller. Different routing protocols are selected for different target devices, and thereby correspond to different extension modes of routing protocol.

Taking the target device being a network node other than the current node as an example, the following explains which routing protocol is selected and how to extend the routing protocol.

When the target device being a network node other than the current node, performing the information processing method is equivalent to a process in which network nodes inform of each other their respective node service related information. In this case, the routing protocol may be an interior gateway protocol (IGP), and accordingly, the extension protocol is an IGP-based protocol. The extension protocol has a type-length-value (TLV) extended on IGP. Accordingly, the node service capability related information is carried by the TLV (also called sub-TLV) of the extension protocol.

Referring to FIG. 2, a flag field of the sub-TLV may include flag bits of the following seven preset positions to identify the node service related information.

A flag bit (Flag S) of the first preset position is configured to identify whether the node supports a slice capability. For example, when Flag S takes value 1, it indicates that the current node supports a slice capability, and when Flag S takes value 0, it indicates that the current node does not support a slice capability.

A flag bit (Flag F) of the second preset position is configured to identify whether the node supports a flow identification capability. For example, when Flag F takes value 1, it indicates that the current node supports a flow identification capability, and when Flag F takes value 0, it indicates that the current node does not support a flow identification capability.

A flag bit (Flag I) of the third preset position is configured to identify whether the node supports an intent capability. For example, when Flag I takes value 1, it indicates that the current node supports an intent capability, and when Flag I takes value 0, it indicates that the current node does not support an intent capability.

A flag bit (Flag IO) of the fourth preset position is configured to identify whether the node supports IOAM information. For example, when Flag IO takes value 1, it indicates that the current node supports IOAM information, and when Flag IO takes value 0, it indicates that the current node does not support IOAM information.

A flag bit (not shown in FIG. 2) of the fifth preset position is configured to identify whether the node supports coloring information. For example, when the flag bit of the fifth preset position takes value 1, it indicates that the current node supports coloring information, and when the flag bit of the fifth preset position takes value 0, it indicates that the current node does not support coloring information.

A flag bit (Flag ME) of the sixth preset position is configured to identify whether the node supports a multi-purpose entropy label capability. For example, when Flag ME takes value 1, it indicates that the current node supports an entropy label capability, and when Flag ME takes value 0, it indicates that the current node does not support an entropy label capability.

A flag bit (not shown in FIG. 2) of the seventh preset position is configured to identify whether the node supports application information. For example, when the flag bit of the seventh preset position takes value 1, it indicates that the current node supports certain application information, and when the flag bit of the seventh preset position takes value 0, it indicates that the current node does not support certain application information.

As described above, the node service capability related information may further include any one of: processing mode information of a service supported by the current node, or length information of service auxiliary data processable by the current node.

Accordingly, the extended sub-TLV may carry processing mode information of a service supported by the current node to define the processing behavior.

In addition, the extended sub-TLV may further carry length information of service auxiliary data processable by the current node (i.e., a forwarding behavior indication length is defined), to indicate a length of the carried specific service (or application) information indication, where the length may be 64 bits or 32 bits.

In the present disclosure, the specific type of IGP is not particularly limited. For example, the IGP may be an intermediate system to intermediate system (ISIS) protocol, and the TLV (i.e., sub-TLV) carrying the node service capability related information is in a routing capability TLV. That is, the node service capability related information is carried in a routing capability TLV to be advertised.

In this implementation, the sub-TLV described above is an extension of the extension protocol with respect to the ISIS protocol. Therefore, a flag bit of the extended sub-TLV may be used to carry a node service capability identification in the node service capability related information.

In some scenarios, the service capability information is combined with a prefix. For example, in a cross-domain scenario, when the ISIS protocol is extended, a Prefix Attribute Flags TLV is extended and used to carry the node service capability related information. In some implementations, extending the Prefix Attribute Flags TLV may specifically include defining a new flag bit in the Prefix Attribute Flags TLV, and identifying various services supported by the node with different flag bits.

As shown in FIG. 3, the new extended flag bits in the Prefix Attribute Flags TLV (i.e., "new defined Flags" in FIG. 3) may be flags of various services supported by the current node.

A flag bit (Flag S) of the first preset position is configured to identify whether the node supports a slice capability. For example, when Flag S takes value 1, it indicates that the current node supports a slice capability, and when Flag S takes value 0, it indicates that the current node does not support a slice capability.

A flag bit (Flag F) of the second preset position is configured to identify whether the node supports a flow identification capability. For example, when Flag F takes value 1, it indicates that the current node supports a flow identification capability, and when Flag F takes value 0, it indicates that the current node does not support a flow identification capability.

A flag bit (Flag I) of the third preset position is configured to identify whether the node supports an intent capability. For example, when Flag I takes value 1, it indicates that the current node supports an intent capability, and when Flag I takes value 0, it indicates that the current node does not support an intent capability.

A flag bit (Flag IO) of the fourth preset position is configured to identify whether the node supports IOAM information. For example, when Flag IO takes value 1, it indicates that the current node supports IOAM information, and when Flag IO takes value 0, it indicates that the current node does not support IOAM information.

A flag bit (not shown in FIG. 3) of the fifth preset position is configured to identify whether the node supports coloring information. For example, when the flag bit of the fifth preset position takes value 1, it indicates that the current node supports coloring information, and when the flag bit of the fifth preset position takes value 0, it indicates that the current node does not support coloring information.

A flag bit (Flag ME) of the sixth preset position is configured to identify whether the node supports a multi-purpose entropy label capability. For example, when Flag ME takes value 1, it indicates that the current node supports an entropy label capability, and when Flag ME takes value 0, it indicates that the current node does not support an entropy label capability.

A flag bit (not shown in FIG. 3) of the seventh preset position is configured to identify whether the node supports application information. For example, when the flag bit of the seventh preset position takes value 1, it indicates that the current node supports certain application information, and when the flag bit of the seventh preset position takes value 0, it indicates that the current node does not support certain application information.

In some implementations, the IGP may be an open shortest path first (OSPF) protocol, and accordingly, the TLV carrying the node service capability related information is in OSPFv3/OSPFv2 Router Information Opaque Link State Advertisement (LSA); and/or the node service capability related information is in OSPF v2/v3 variable length Prefix attributes Sub-TLVs.

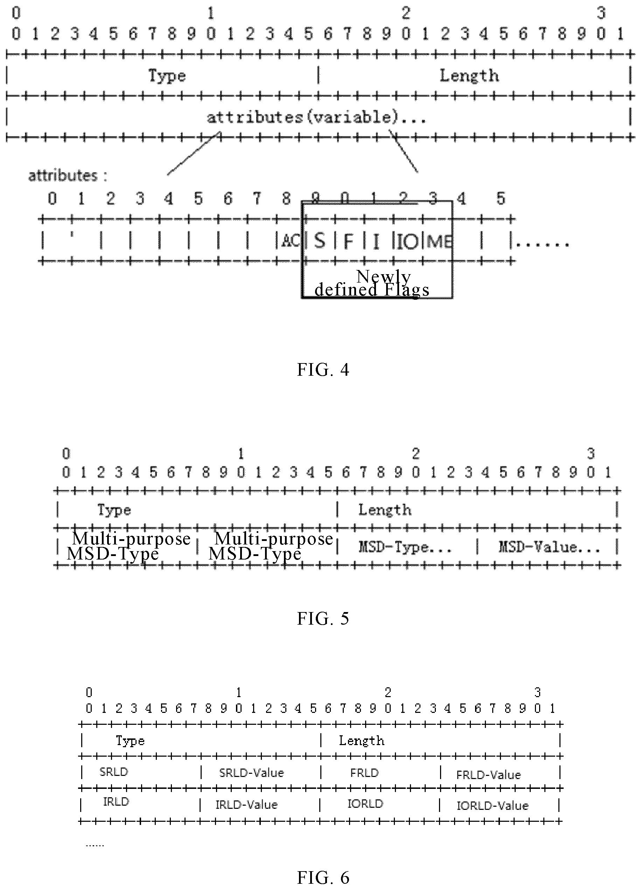

As shown in FIG. 4, the new extended flag bits in OSPF v2/v3 variable length Prefix attributes Sub-TLVs ("new defined Flags" in FIG. 4) may be identifications of various services supported by the current node.

A flag bit (Flag S) of the first preset position is configured to identify whether the node supports a slice capability. For example, when Flag S takes value 1, it indicates that the current node supports a slice capability, and when Flag S takes value 0, it indicates that the current node does not support a slice capability.

A flag bit (Flag F) of the second preset position is configured to identify whether the node supports a flow identification capability. For example, when Flag F takes value 1, it indicates that the current node supports a flow identification capability, and when Flag F takes value 0, it indicates that the current node does not support a flow identification capability.

A flag bit (Flag I) of the third preset position is configured to identify whether the node supports an intent capability. For example, when Flag I takes value 1, it indicates that the current node supports an intent capability, and when Flag I takes value 0, it indicates that the current node does not support an intent capability.

A flag bit (Flag IO) of the fourth preset position is configured to identify whether the node supports IOAM information. For example, when Flag IO takes value 1, it indicates that the current node supports IOAM information, and when Flag IO takes value 0, it indicates that the current node does not support IOAM information.

A flag bit (not shown in FIG. 3) of the fifth preset position is configured to identify whether the node supports coloring information. For example, when the flag bit of the fifth preset position takes value 1, it indicates that the current node supports coloring information, and when the flag bit of the fifth preset position takes value 0, it indicates that the current node does not support coloring information.

A flag bit (Flag ME) of the sixth preset position is configured to identify whether the node supports a multi-purpose entropy label capability. For example, when Flag ME takes value 1, it indicates that the current node supports an entropy label capability, and when Flag ME takes value 0, it indicates that the current node does not support an entropy label capability.

A flag bit (not shown in FIG. 3) of the seventh preset position is configured to identify whether the node supports application information. For example, when the flag bit of the seventh preset position takes value 1, it indicates that the current node supports certain application information, and when the flag bit of the seventh preset position takes value 0, it indicates that the current node does not support certain application information.

When the target device is a network node, the IGP-based extension protocol may be further used to advertise readable depths for various services (including applications and/or services) of the current node. In other words, the node service related information further includes label depth information. In this implementation, the extension protocol further has an extended Node Maximum SID Depth (Node MSD) sub-TLV. The extended Node MSD sub-TLV is used to carry a readable label depth for a service. When the extension protocol is based on IGP, in some implementations, the label depth information includes readable label depths for one or more services of the current node. As shown in FIG. 5, the extended Node MSD sub-TLV may be used to carry a readable label depth value of a multi-purpose label. The multi-purpose label here refers to a special label in which flag bits are defined to identify the specific application after the label is used to represent a multi-purpose capability. The application here includes, but is not limited to, a slice, flow identification, an intent (delay, jitter, bandwidth, etc.), IOAM, coloring, application-related information, and the like.

Different MSD types may be obtained by extending for different services, and the extended MSD sub-TLV is used to define readable label depths for various services of the current node.

For example, as shown in FIG. 6: a slice readable label depth (SRLD) may be defined in the MSD sub-TLV to carry a value of SRLD of the node; a flow readable label depth (FRLD) may be defined in the MSD sub-TLV to carry a readable label depth value of a flow label of the node; an intent readable label depth (IRLD) may be defined in the MSD sub-TLV to carry a readable label depth value of an intent information label of the node; and an IOAM readable label depth (IORLD) may be defined in the MSD sub-TLV to carry a readable label depth value of an IOAM information label of the node.

Apparently, readable label depths of various services, such as coloring information, an ME entropy label, an application, and the like, can also be defined in the MSD sub-TLV.

The above description is given with respect to the case where the target device is a network node other than the current node, and the following describes the case where the target device is a controller.

When the target device is a controller, the extension protocol may be protocol based on a border gateway protocol-link-state (BGP-LS) protocol.

In the present disclosure, how to extend the BGP-LS protocol is not particularly limited. For the node service capability related information, in some implementations, the BGP-LS protocol may be extended so that an extended BGP-LS attribute carries the node service capability related information.

In some implementations, the extended BGP-LS attribute is a node attribute, and the node service capability related information is carried by a TLV of the node attribute.

Similar to IGP, a flag bit of an extended sub-TLV may be used to carry a node service capability identification in the node service capability related information. The flag field of the sub-TLV may include flag bits of the following seven preset positions to identify the node service related information.

A flag bit (Flag S) of the first preset position is configured to identify whether the node supports a slice capability. For example, when Flag S takes value 1, it indicates that the current node supports a slice capability, and when Flag S takes value 0, it indicates that the current node does not support a slice capability.

A flag bit (Flag F) of the second preset position is configured to identify whether the node supports a flow identification capability. For example, when Flag F takes value 1, it indicates that the current node supports a flow identification capability, and when Flag F takes value 0, it indicates that the current node does not support a flow identification capability.

A flag bit (Flag I) of the third preset position is configured to identify whether the node supports an intent capability. For example, when Flag I takes value 1, it indicates that the current node supports an intent capability, and when Flag I takes value 0, it indicates that the current node does not support an intent capability.

A flag bit (Flag IO) of the fourth preset position is configured to identify whether the node supports IOAM information. For example, when Flag IO takes value 1, it indicates that the current node supports IOAM information, and when Flag IO takes value 0, it indicates that the current node does not support IOAM information.

A flag bit of the fifth preset position is configured to identify whether the node supports coloring information. For example, when the flag bit of the fifth preset position takes value 1, it indicates that the current node supports coloring information, and when the flag bit of the fifth preset position takes value 0, it indicates that the current node does not support coloring information.

A flag bit of the sixth preset position is configured to identify whether the node supports a multi-purpose entropy label capability. For example, when Flag ME takes value 1, it indicates that the current node supports an entropy label capability, and when Flag ME takes value 0, it indicates that the current node does not support an entropy label capability.

A flag bit of the seventh preset position is configured to identify whether the node supports application information. For example, when the flag bit of the seventh preset position takes value 1, it indicates that the current node supports certain application information, and when the flag bit of the seventh preset position takes value 0, it indicates that the current node does not support certain application information.

As described above, the node service capability related information may further include any one of: processing mode information of a service supported by the current node, or length information of service auxiliary data processable by the current node.

Accordingly, the extended sub-TLV may carry processing mode information of a service supported by the current node to define the processing behavior.

In addition, the extended sub-TLV may further carry length information of service auxiliary data processable by the current node (i.e., a forwarding behavior indication length is defined), to indicate a length of the carried specific service (or application) information indication, where the length may be 64 bits or 32 bits.

In an implementation where the node service capability related information is a node attribute, in some scenarios (e.g., a cross-domain scenario), the service capability related information may be combined with a prefix. In this case, the extended BGP-LS attribute is a prefix attribute, and the node service capability related information is carried by a TLV of the prefix attribute.

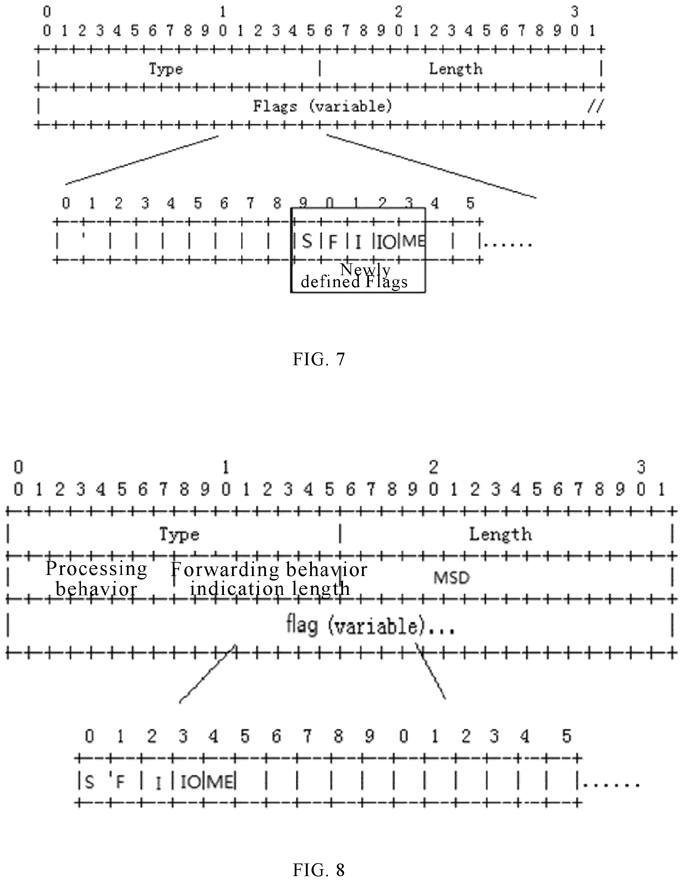

As shown in FIG. 7, the extension to the prefix attribute of the BGL-LS may include extension of a flag bit in a prefix attribute Flags TLV, and the extended flag bit may be used to carry a node service capability identification in the node service capability related information.

A flag bit (Flag S) of the first preset position is configured to identify whether the node supports a slice capability. For example, when Flag S takes value 1, it indicates that the current node supports a slice capability, and when Flag S takes value 0, it indicates that the current node does not support a slice capability.

A flag bit (Flag F) of the second preset position is configured to identify whether the node supports a flow identification capability. For example, when Flag F takes value 1, it indicates that the current node supports a flow identification capability, and when Flag F takes value 0, it indicates that the current node does not support a flow identification capability.

A flag bit (Flag I) of the third preset position is configured to identify whether the node supports an intent capability. For example, when Flag I takes value 1, it indicates that the current node supports an intent capability, and when Flag I takes value 0, it indicates that the current node does not support an intent capability.

A flag bit (Flag IO) of the fourth preset position is configured to identify whether the node supports IOAM information. For example, when Flag IO takes value 1, it indicates that the current node supports IOAM information, and when Flag IO takes value 0, it indicates that the current node does not support IOAM information.

A flag bit (not shown in FIG. 7) of the fifth preset position is configured to identify whether the node supports coloring information. For example, when the flag bit of the fifth preset position takes value 1, it indicates that the current node supports coloring information, and when the flag bit of the fifth preset position takes value 0, it indicates that the current node does not support coloring information.

A flag bit (Flag ME) of the sixth preset position is configured to identify whether the node supports a multi-purpose entropy label capability. For example, when Flag ME takes value 1, it indicates that the current node supports an entropy label capability, and when Flag ME takes value 0, it indicates that the current node does not support an entropy label capability.

A flag bit (not shown in FIG. 7) of the seventh preset position is configured to identify whether the node supports application information. For example, when the flag bit of the seventh preset position takes value 1, it indicates that the current node supports certain application information, and when the flag bit of the seventh preset position takes value 0, it indicates that the current node does not support certain application information.

When the node service related information includes label depth information, the extension protocol may include an extension of the BGP-LS protocol to obtain an extended Node Maximum SID Depth (Node MSD) sub-TLV. The extended Node MSD sub-TLV is used to carry a readable label depth for a service.

When the extension protocol is based on a BGP-LS protocol, in some implementations, the label depth information includes a readable label depth corresponding to each service capability supported by a current node. Accordingly, the extended Node MSD sub-TLV may be used to carry a readable label depth value of a multi-purpose label.

Different MSD types may be extended for different services supported by the node, and carry a corresponding readable label depth value. For example: a slice readable label depth (SRLD) may be defined in the MSD sub-TLV to carry an SRLD of the node; and a flow readable label depth (FRLD) may be defined in the MSD sub-TLV to carry a readable label depth of a flow label of the node.

When the target device is a controller, the routing protocol may further include an extended path computation element communication protocol (PCEP). In this implementation, the extension protocol has a TLV (which may be referred to as a sub-TLV) extended on PCEP, and accordingly, the node service capability related information is carried by the TLV of the extension protocol. By extending the PCEP and sending the target message carrying the node service capability related information to the controller, the node can inform the controller of the service capability supported by the current node.

In some implementations, the TLV of the extension protocol may include an extended PCE capability sub-TLV (which may also be referred to as a multi-purpose PCE capability sub-TLV), the node service capability related information is carried by the PCE capability sub-TLV, and the PCE capability sub-TLV is carried in an open message. In other words, the target message is in the form of an open message.

In the present disclosure, the primary message may further carry support information configured to characterize that the controller is supported to insert service information into the computed SR path. After receiving the support information, the controller may deliver an SR path inserted with the service information to the controller. Therefore, the "support information" may also be regarded as a representation of the "node service capability related information".

For example, as shown in FIG. 8, at least one new flag bit may be defined in the extended sub-TLV, where each new flag bit corresponds to one service and is configured to advertise to the controller that the current node supports the controller to insert corresponding service information in the computed SR path. For example, the at least one new flag bit in the sub-TLV obtained by extension includes a flag bit of a first preset position, a flag bit of a second preset position, a flag bit of a third preset position, a flag bit of a fourth preset position, a flag bit of a fifth preset position, a flag bit of a sixth preset position, and a flag bit of a seventh preset position.

The flag bit (Flag S) of the first preset position is configured to identify that the node supports the controller to insert slice information in the computed SR path.

The flag bit (Flag F) of the second preset position is configured to identify that the node supports the controller to insert flow information in the computed SR path.

The flag bit (Flag I) of the third preset position is configured to identify that the node supports the controller to insert intent information in the computed SR path.

The flag bit (Flag IO) of the fourth preset position is configured to identify that the node supports the controller to insert IOAM information in the computed SR path.

The flag bit (not shown in FIG. 8) of the fifth preset position is configured to identify that the node supports the controller to insert coloring information in the computed SR path.

The flag bit (Flag ME) of the sixth preset position is configured to identify that the node supports the controller to insert entropy label information in the computed SR path.

The flag bit (not shown in FIG. 8) of the seventh preset position is configured to identify that the node supports the controller to insert application information in the computed SR path.

As shown in FIG. 8, the extended sub-TLV may further carry processing mode information of a service supported by the current node to define the processing behavior.

In addition, the extended sub-TLV may further carry length information of service auxiliary data processable by the current node (i.e., a forwarding behavior indication length is defined), to indicate a length of the carried specific service (or application) information indication, where the length may be 64 bits or 32 bits.

In some implementations, the node service capability related information is carried by flag bits in the extended LSP-EXTENDED-FLAG TLV, to request a controller to insert the service capability related information in an SR path.

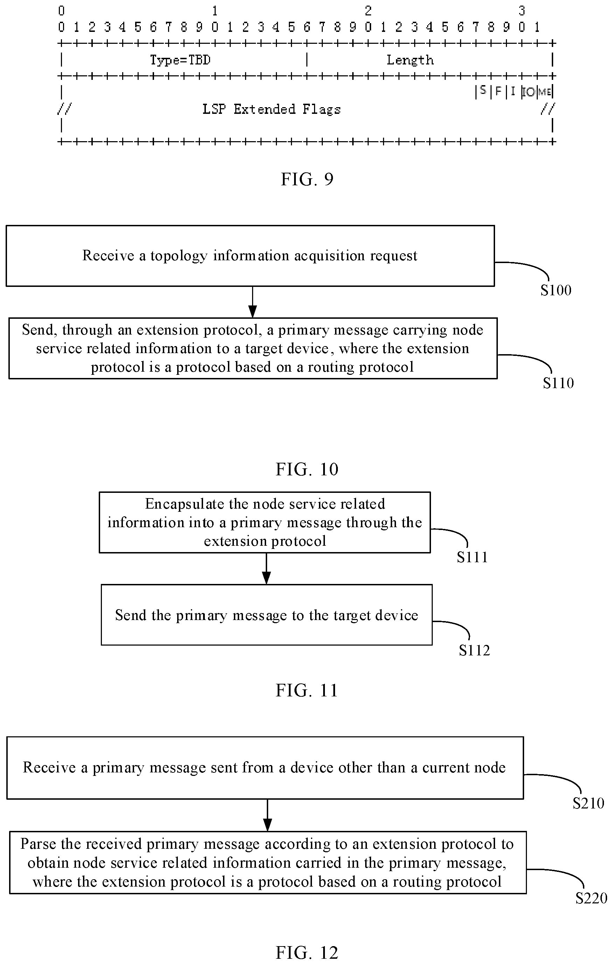

For example, as shown in FIG. 9, the flag bits in the extended LSP-EXTENDED-FLAG TLV may be used to represent identification information of a service supported by the current node.

A flag bit (Flag S) of a first preset position is configured to request the controller to insert slice information in the computed SR path.

A flag bit (Flag F) of a second preset position is configured to request the controller to insert flow information in the computed SR path.

A flag bit (Flag I) of a third preset position is configured to request the controller to insert intent information in the computed SR path.

A flag bit (Flag IO) of a fourth preset position is configured to request the controller to insert IOAM information in the computed SR path.

A flag bit (not shown in FIG.9) of a fifth preset position is configured to request the controller to insert coloring information in the computed SR path.

A flag bit (Flag ME) of a sixth preset position is configured to request the controller to insert entropy label information in the computed SR path.

A flag bit (not shown in FIG.9) of a seventh preset position is configured to request the controller to insert application information in the computed SR path.

Accordingly, when the controller receives the primary message sent through the extension protocol and delivers a path to the node, corresponding information can be inserted into the delivered SR path.

How the controller inserts the corresponding information in the delivered path will be described below, and will not be described in detail here.

In the present disclosure, the timing of the network node sending the primary message to the controller is not particularly limited. As described above, the extension protocol is based on a routing protocol. Accordingly, in some implementations, the corresponding node service related information may be sent to the network node when the controller sends topology collection information to the network node. That is, before operation S 110, as shown in FIG. 10, the method may further include operation S100.

At operation S 100, a topology information acquisition request is received.

Accordingly, the primary message may further carry network topology information of the current node.

In the present disclosure, how to send the primary message to the target device through the extension protocol is not particularly limited.

In some implementations, as shown in FIG. 11, operation S110 may include operations S111 and S112.

At operation S 111, the node service related information is encapsulated into a primary message through the extension protocol.

At operation S112, the primary message is sent to the target device.

The above describes how a network node sends its node service related information to a target device. The following will explain how to process the node service related information at the network node upon receiving the node service related information from another device.

As a second aspect of the present disclosure, there is provided an information processing method applied to a network node, which, as shown in FIG. 12, includes operations S210 and S220.

At operation S210, a primary message sent from a device other than a current node is received.

At operation S220, the received primary message is parsed according to an extension protocol to obtain node service related information carried in the primary message, where the extension protocol is a protocol based on a routing protocol.

Upon receiving a primary message sent from another device, the current node may parse the primary message according to an extension protocol, and obtain node service related information carried in the primary message. It should be noted that the node service related information carried in the primary message received by the current node is not information on services supported by the current node, but information on services supported by another device (which may include a controller or a network node other than the current node). Therefore, with the information processing method of the present disclosure, the network node can acquire information on services supported by other devices without depending on a multi-purpose label, thereby solving the problem that the multi-purpose label technology is not supported in an MPLS network.

In the present disclosure, how to process the node service related information after the node service related information is obtained is not particularly limited. For example, the node may directly store the parsed node service related information locally.

In the information processing method according to the second aspect of the present disclosure, the node service related information includes at least one of: node service capability related information, service insertion position information, or label depth information of a corresponding node.

The service insertion position information is configured to characterize a position in the path of at least one type of service information determined by the controller.

Similar to the description in the first aspect of the present disclosure, the label depth information includes a readable label depth corresponding to each service capability supported by a current node, or the label depth information includes a readable depth of a multi-purpose label carrying various service capabilities supported by the current node. The node service capability information is configured to characterize an application or service supported by a node executing the information processing method.

In some implementations, the node service capability related information includes at least one of: service capability identification information of at least one service supported by the corresponding node, processing mode information of a service supported by the corresponding node, or length information of service auxiliary data processable by the corresponding node. The processing mode information includes at least one of: discarding the received packet, uploading the received packet to a control plane, or skipping node service related information carried in the received packet.

As described above, for a network node, when the primary message carrying node service related information is sent, the node service related information is identified by a flag bit of at least one preset position of a flag field in an extension of the extension protocol. Upon receiving the primary message sent from another node, the network node may parse the flag bit of at least one preset position of the flag field in an extension according to the extension protocol to determine the node service related information.

In some implementations, the at least one preset position includes at least one of a first preset position, a second preset position, a third preset position, a fourth preset position, a fifth preset position, a sixth preset position, or a seventh preset position.

Information of the first preset position is parsed to judge whether the corresponding node supports a slice capability.

Information of the second preset position is parsed to judge whether the corresponding node supports a flow identification capability.

Information of the third preset position is parsed to judge whether the corresponding node supports an intent capability.

Information of the fourth preset position is parsed to judge whether the corresponding node supports IOAM information.

Information of the fifth preset position is parsed to judge whether the corresponding node supports coloring information.

Information of the sixth preset position is parsed to judge whether the corresponding node supports a multi-purpose entropy label capability.

Information of the seventh preset position is parsed to judge whether the corresponding node supports application information.

As described above, network nodes may advertise their respective service related information to each other through the extended IGP, or may send their own node service related information to the controller.

Therefore, when the other device is a network node other than the current node, the routing protocol may include IGP, and the extension protocol has a TLV extended on the routing protocol. Accordingly, at operation S220, a portion corresponding to the TLV of the extension protocol in the primary message is parsed to obtain node service capability related information in the node service related information.

As described above, network nodes may send the primary message by extending the ISIS protocol. In a case where the extension protocol is based on an ISIS protocol, a TLV (i.e., sub-TLV) carrying the node service related information in the extension protocol is located in a routing capability TLV. In a cross-domain scenario, the node service related information is carried in a Prefix Attribute Flags TLV. Accordingly, network nodes may parse the received primary message according to the extended ISIS protocol. Therefore, at operation S220, a portion corresponding to the extended TLV of the extension protocol in the routing capability TLV is parsed to obtain node service related information carried in the primary message.

For the extension protocol based on an ISIS protocol, a flag field of the sub-TLV may include flag bits of the following seven preset positions to identify the node service related information.

A flag bit (Flag S) of a first preset position may be parsed to determine whether the corresponding node supports a slice capability. For example, when Flag S takes value 1, it indicates that the corresponding node supports a slice capability, and when Flag S takes value 0, it indicates that the corresponding node does not support a slice capability.

A flag bit (Flag F) of a second preset position may be parsed to determine whether the corresponding node supports a flow identification capability. For example, when Flag F takes value 1, it indicates that the corresponding node supports a flow identification capability, and when Flag F takes value 0, it indicates that the corresponding node does not support a flow identification capability.

A flag bit (Flag I) of a third preset position may be parsed to determine whether the corresponding node supports an intent capability. For example, when Flag I takes value 1, it indicates that the corresponding node supports an intent capability, and when Flag I takes value 0, it indicates that the corresponding node does not support an intent capability.

A flag bit (Flag IO) of a fourth preset position may be parsed to determine whether the corresponding node supports IOAM information. For example, when Flag IO takes value 1, it indicates that the corresponding node supports IOAM information, and when Flag IO takes value 0, it indicates that the corresponding node does not support IOAM information.

A flag bit of a fifth preset position may be parsed to determine whether the corresponding node supports coloring information. For example, when the flag bit of the fifth preset position takes value 1, it indicates that the corresponding node supports coloring information, and when the flag bit of the fifth preset position takes value 0, it indicates that the corresponding node does not support coloring information.

A flag bit (Flag ME) of a sixth preset position may be parsed to determine whether the corresponding node supports a multi-purpose entropy label capability. For example, when Flag ME takes value 1, it indicates that the corresponding node supports an entropy label capability, and when Flag ME takes value 0, it indicates that the corresponding node does not support an entropy label capability.

A flag bit of a seventh preset position may be parsed to determine whether the corresponding node supports application information. For example, when the flag bit of the seventh preset position takes value 1, it indicates that the corresponding node supports certain application information, and when the flag bit of the seventh preset position takes value 0, it indicates that the corresponding node does not support certain application information.

In a cross-domain scenario, the node service capability information is combined with a prefix when the network node sends node service related information. Accordingly, the Prefix Attribute Flags TLV is extended when the ISIS protocol is extended. In a cross-domain scenario, when the network node receives a primary message sent through an extended ISIS protocol, operation S220 includes parsing a portion corresponding to the extended TLV of the extension protocol in the Prefix Attribute Flags TLV, to obtain node service related information carried in the primary message.

The new extended flag bits in the Prefix Attribute Flags TLV may be identifications of various services supported by the node. The corresponding flag bits include a flag bit of a first preset position, a flag bit of a second preset position, a flag bit of a third preset position, a flag bit of a fourth preset position, a flag bit of a fifth preset position, a flag bit of a sixth preset position, and a flag bit of a seventh preset position.

The flag bit (Flag S) of the first preset position may be parsed to determine whether the corresponding node supports a slice capability. For example, when Flag S takes value 1, it indicates that the corresponding node supports a slice capability, and when Flag S takes value 0, it indicates that the corresponding node does not support a slice capability.

The flag bit (Flag F) of the second preset position may be parsed to determine whether the corresponding node supports a flow identification capability. For example, when Flag F takes value 1, it indicates that the corresponding node supports a flow identification capability, and when Flag F takes value 0, it indicates that the corresponding node does not support a flow identification capability.

The flag bit (Flag I) of the third preset position may be parsed to determine whether the corresponding node supports an intent capability. For example, when Flag I takes value 1, it indicates that the corresponding node supports an intent capability, and when Flag I takes value 0, it indicates that the corresponding node does not support an intent capability.

The flag bit (Flag IO) of the fourth preset position may be parsed to determine whether the corresponding node supports IOAM information. For example, when Flag IO takes value 1, it indicates that the corresponding node supports IOAM information, and when Flag IO takes value 0, it indicates that the corresponding node does not support IOAM information.

The flag bit of the fifth preset position may be parsed to determine whether the corresponding node supports coloring information. For example, when the flag bit of the fifth preset position takes value 1, it indicates that the corresponding node supports coloring information, and when the flag bit of the fifth preset position takes value 0, it indicates that the corresponding node does not support coloring information.

The flag bit (Flag ME) of the sixth preset position may be parsed to determine whether the corresponding node supports a multi-purpose entropy label capability. For example, when Flag ME takes value 1, it indicates that the corresponding node supports an entropy label capability, and when Flag ME takes value 0, it indicates that the corresponding node does not support an entropy label capability.

The flag bit of the seventh preset position may be parsed to determine whether the corresponding node supports application information. For example, when the flag bit of the seventh preset position takes value 1, it indicates that the corresponding node supports certain application information, and when the flag bit of the seventh preset position takes value 0, it indicates that the corresponding node does not support certain application information.

As described above, the network node may further advertise its readable depths for various service (including applications and/or services) through an extension protocol based on IGP. In other words, the node service related information further includes label depth information. In this implementation, the extension protocol further has an extended Node Maximum SID Depth (Node MSD) sub-TLV. The extended Node MSD sub-TLV is used to carry a readable label depth for a service.

Therefore, upon receiving the primary message sent from another network node, the network node may parse the primary message to further obtain label depth information of the corresponding node. The Node MSD sub-TLV may be parsed to determine the label depth information of the corresponding node. For example, an FRLD in the MSD sub-TLV may be parsed to determine a flow readable label depth of the corresponding node.

As described above, the network node may send the primary message through an extension protocol based on an OSPF protocol. For example, when the network node sends the primary message through the extended OSPF protocol, the node service related information is carried in OSPFv3/OSPFv2 Router Information Opaque LSA and/or OSPF v2/v3 variable length Prefix attributes Sub-TLVs. Accordingly, the network node may parse the received primary message according to the extension protocol based on the OSPF protocol. Therefore, operation S220 includes parsing a portion corresponding to the TLV of the extension protocol in the OSPFv3/OSPFv2 Router Information Opaque LSA, to obtain node service related information carried in the primary message. In a cross-domain scenario, operation S220 includes parsing a portion corresponding to the TLV of the extension protocol in the OSPF v2/v3 variable length Prefix attributes Sub-TLVs, to obtain node service related information carried in the primary message.

In parsing of the portion corresponding to the TLV of the extension protocol in the OSPF v2/v3 variable length Prefix attributes Sub-TLVs, the new extended flag bits in the Sub-TLVs are parsed, and the new extended flag bits include a flag bit of a first preset position, a flag bit of a second preset position, a flag bit of a third preset position, a flag bit of a fourth preset position, a flag bit of a fifth preset position, a flag bit of a sixth preset position, and a flag bit of a seventh preset position.

The flag bit (Flag S) of the first preset position may be parsed to determine whether the corresponding node supports a slice capability. For example, when Flag S takes value 1, it indicates that the corresponding node supports a slice capability, and when Flag S takes value 0, it indicates that the corresponding node does not support a slice capability.

The flag bit (Flag F) of the second preset position may be parsed to determine whether the corresponding node supports a flow identification capability. For example, when Flag F takes value 1, it indicates that the corresponding node supports a flow identification capability, and when Flag F takes value 0, it indicates that the corresponding node does not support a flow identification capability.

The flag bit (Flag I) of the third preset position may be parsed to determine whether the corresponding node supports an intent capability. For example, when Flag I takes value 1, it indicates that the corresponding node supports an intent capability, and when Flag I takes value 0, it indicates that the corresponding node does not support an intent capability.

The flag bit (Flag IO) of the fourth preset position may be parsed to determine whether the corresponding node supports IOAM information. For example, when Flag IO takes value 1, it indicates that the corresponding node supports IOAM information, and when Flag IO takes value 0, it indicates that the corresponding node does not support IOAM information.

The flag bit of the fifth preset position may be parsed to determine whether the corresponding node supports coloring information. For example, when the flag bit of the fifth preset position takes value 1, it indicates that the corresponding node supports coloring information, and when the flag bit of the fifth preset position takes value 0, it indicates that the corresponding node does not support coloring information.

The flag bit (Flag ME) of the sixth preset position may be parsed to determine whether the corresponding node supports a multi-purpose entropy label capability. For example, when Flag ME takes value 1, it indicates that the corresponding node supports an entropy label capability, and when Flag ME takes value 0, it indicates that the corresponding node does not support an entropy label capability.

The flag bit of the seventh preset position may be parsed to determine whether the corresponding node supports application information. For example, when the flag bit of the seventh preset position takes value 1, it indicates that the corresponding node supports certain application information, and when the flag bit of the seventh preset position takes value 0, it indicates that the corresponding node does not support certain application information.

The controller may send, through the extension protocol, a primary message carrying node service related information to a network node. Accordingly, the network node may further parse the primary message delivered by the controller through the same extension protocol, to obtain the corresponding node service related information. The following describes specific implementations of the information processing method when the other device is a controller.

In some implementations, the routing protocol may include PCEP, and the extension protocol has a TLV extended on the routing protocol. The controller carries the node service related information in the extended TLV through the extended PCEP, and sends the node service related information to a network node in the form of a primary message (hereinafter "target message"). Correspondingly, while performing operation S220, the network node parses a portion corresponding to the extended TLV of the extension protocol in the primary message to obtain the corresponding node service related information.

In some implementations, the extended TLV of the extension protocol includes an extended PCE capability sub-TLV, the received primary message is an open message, and accordingly, in the operation of parsing the extended TLV of the extension protocol, the PCE capability sub-TLV carried in the open message is parsed.

In some implementations, the extended TLV of the extension protocol includes an extended LSP-EXTENDED-FLAG TLV, and in the operation of parsing the extended TLV of the extension protocol, flag bits of a portion corresponding to the extended LSP-EXTENDED-FLAG TLV are parsed.

When the external device is a controller, the primary message further carries the service insertion position information. Therefore, the service insertion position information may be further determined by parsing the extended TLV of the extension protocol.

In some implementations, the routing protocol is PCEP, and the extended TLV of the extension protocol includes an extended segment routing-explicit route object (SR-ERO object). Different flag bits in the extended SR-ERO object are configured to characterize service insertion position information corresponding to different pieces of service information, so as to advertise service information to be inserted after a corresponding segment identifier (SID) through the target message. Accordingly, parsing the received primary message according to the extension protocol includes: parsing flag bits of a portion corresponding to the extended SR-ERO object in the primary message, to determine service insertion position information advertised by the controller, and service information to be inserted after a corresponding SID.

For example, when the controller sends the primary message through the extended PCEP, the flag bits in the SR-ERO object include flag bits of a first preset position, a second preset position, a third preset position, a fourth preset position, a fifth preset position, a sixth preset position, and a seventh preset position.

A flag bit (Flag S) of the first preset position is configured to identify inserting slice information after a corresponding SID.

A flag bit (Flag F) of the second preset position is configured to identify inserting flow information after a corresponding SID.

A flag bit (Flag I) of the third preset position is configured to identify inserting intent information after a corresponding SID.

A flag bit (Flag IO) of the fourth preset position is configured to identify inserting IOAM information after a corresponding SID.

A flag bit (not shown) of the fifth preset position is configured to identify inserting coloring information after a corresponding SID.

A flag bit (Flag ME) of the sixth preset position is configured to identify inserting entropy label information after a corresponding SID.

A flag bit (not shown) of the seventh preset position is configured to identify inserting certain application information after a corresponding SID.

Accordingly, when the network node receives the primary message carried by a flag bit in the extended SR-ERO object, the Flag S may be parsed to determine whether slice information is inserted after the corresponding SID; the Flag F may be parsed to determine whether flow information is inserted after the corresponding SID; the Flag I may be parsed to determine whether intent information is inserted after the corresponding SID; the Flag IO may be parsed to determine whether IOAM information is inserted after the corresponding SID; the flag bit of the fifth preset position may be parsed to determine whether coloring information is inserted after the corresponding SID; the Flag ME may be parsed to determine whether entropy label information is inserted after the corresponding SID; and the flag bit of the seventh preset position may be parsed to determine whether certain application information is inserted after the corresponding SID.

When the other device is a controller, the routing protocol may include BGP. The controller may send the primary message to the network node through a BGP-based extension protocol. Accordingly, upon receiving the primary message sent from the controller through the extension protocol extended on BGP, the network node may parse the primary message through a corresponding extension protocol extended on BGP. Further, the node service related information may include service insertion position information, and the extension protocol has extended Segment Sub-TLVs in which different flag bits are configured to characterize service insertion position information corresponding to different services, so as to advertise service information to be inserted after a corresponding SID through the target message. Parsing the received primary message according to the extension protocol includes: parsing flag bits of a portion corresponding to the extended Segment Sub-TLVs in the primary message, to determine service insertion position information advertised by the controller, and service information to be inserted after a corresponding SID.

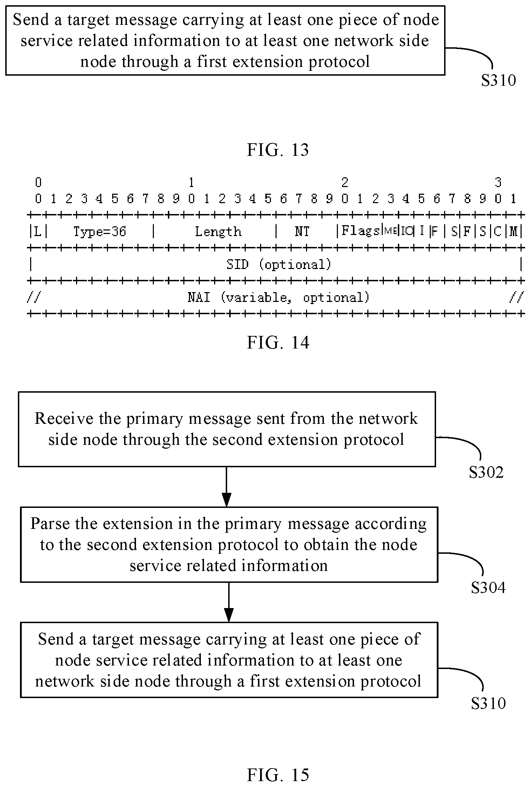

As a third aspect of the present disclosure, there is provided an information processing method applied to a controller, which, as shown in FIG. 13, includes operation S310.

At operation S310, a target message carrying at least one piece of node service related information is sent to at least one network node through a first extension protocol, where the first extension protocol is a protocol based on a first routing protocol.

The controller may send the target message carrying the node service related information to the network node. Upon receiving the target message, the network node may parse the target message to obtain node service related information carried in the target message. In this manner, the network node can receive node service related information of a node other than the current node. In other words, with the information processing method provided in the present disclosure, the network node can acquire information on services supported by other devices without depending on a multi-purpose label, thereby solving the problem that the multi-purpose label technology is not supported in an MPLS network.

In some implementations, the node service related information includes at least one of: node service capability related information, service insertion position information or label depth information.

In the present disclosure, the service insertion position information is configured to characterize a position in the path of at least one type of service information determined by the current controller.

Similar to the label depth information described above, the label depth information here includes a readable label depth corresponding to each service capability supported by a node, or the label depth information includes a readable depth of a multi-purpose label carrying various service capabilities supported by a node.

Likewise, the node service capability related information is information characterizing services (including applications and/or services) supported by a node.

In some implementations, the node service capability related information includes at least one of: service capability identification information of at least one service supported by a node, processing mode information of a service supported by a node, or length information of service auxiliary data processable by a node.

The processing mode information includes at least one of: discarding the received packet, uploading the received packet to a control plane, or skipping service information characterized by node service capability related information carried in the received packet.

In the present disclosure, how to enable the target message to carry the node service related information through the first extension protocol is not particularly limited, and in some implementations, the first extension protocol has a TLV extended on the first routing protocol, the node service related information is carried by the extended TLV of the first extension protocol, and the first routing protocol is selected from any one of: BGP or PCEP.

In some implementations, the first routing protocol includes PCEP, the TLV of the first extension protocol includes an extended PCE capability sub-TLV, the node service related information is carried by the PCE capability sub-TLV, and the PCE capability sub-TLV is carried in an open message.

In some implementations, the first routing protocol includes PCEP, the extended TLV of the first extension protocol includes an extended LSP-EXTENDED-FLAG TLV, and the node service capability related information is carried by flag bits in the extended LSP-EXTENDED-FLAG TLV, to insert node service capability related information corresponding to a node in an SR path.

In some implementations, the target message further carries service insertion position information, the first routing protocol includes PCEP, the TLV of the first extension protocol includes an extended segment routing-explicit route object (SR-ERO object), different flag bits in the extended SR-ERO object are configured to characterize service insertion position information corresponding to different pieces of service information, so as to advertise service information to be inserted after a corresponding SID through the target message.

As shown in FIG. 14, the flag bits in the SR-ERO object include flag bits of a first preset position, a second preset position, a third preset position, a fourth preset position, a fifth preset position, a sixth preset position, and a seventh preset position.

A flag bit (Flag S) of the first preset position is configured to identify inserting slice information after a corresponding SID.

A flag bit (Flag F) of the second preset position is configured to identify inserting flow information after a corresponding SID.

A flag bit (Flag I) of the third preset position is configured to identify inserting intent information after a corresponding SID.

A flag bit (Flag IO) of the fourth preset position is configured to identify inserting IOAM information after a corresponding SID.

A flag bit (not shown in FIG. 14) of the fifth preset position is configured to identify inserting coloring information after a corresponding SID.

A flag bit (Flag ME) of the sixth preset position is configured to identify inserting entropy label information after a corresponding SID.

A flag bit (not shown in FIG. 14) of the seventh preset position is configured to identify inserting certain application information after a corresponding SID.

In the present disclosure, how to obtain the node service related information is not particularly limited. In some implementations, the node service related information is carried in a primary message sent from a network node, the primary message is obtained by the network node by encapsulating the node service related information through a second extension protocol, and the second extension protocol is a protocol based on a second routing protocol. Accordingly, as shown in FIG. 15, before operation S310, the information processing method further includes operations S302 and S304.

At operation S302, the primary message sent from the network node through the second extension protocol is received.

At operation S304, the extension in the primary message is parsed according to the second extension protocol to obtain the node service related information.

In some implementations, the node service related information includes the node service capability related information. Accordingly, the second routing protocol includes a BGP-LS protocol, the second extension protocol defines a BGP-LS attribute obtained by extending the BGP-LS protocol, and parsing the extension in the primary message according to the second extension protocol includes: parsing a portion corresponding to the extended BGP-LS attribute in the primary message, to obtain the node service capability related information.

Further, in the operation of parsing the BGP-LS attribute of the primary message according to the second extension protocol, a TLV of a node attribute is parsed; and/or in the operation of parsing the BGP-LS attribute of the primary message according to the second extension protocol, a TLV of the extended prefix attribute is parsed.

For example, when the network node sends the primary message through the first extension protocol, the node service capability related information may be carried in a flag bit in a Flags TLV of the prefix attribute.

A flag bit (Flag S) of a first preset position is configured to identify whether the node supports a slice capability. For example, when Flag S takes value 1, it indicates that the current node supports a slice capability, and when Flag S takes value 0, it indicates that the current node does not support a slice capability.

A flag bit (Flag F) of a second preset position is configured to identify whether the node supports a flow identification capability. For example, when Flag F takes value 1, it indicates that the current node supports a flow identification capability, and when Flag F takes value 0, it indicates that the current node does not support a flow identification capability.

A flag bit (Flag I) of a third preset position is configured to identify whether the node supports an intent capability. For example, when Flag I takes value 1, it indicates that the current node supports an intent capability, and when Flag I takes value 0, it indicates that the current node does not support an intent capability.

A flag bit (Flag IO) of a fourth preset position is configured to identify whether the node supports IOAM information. For example, when Flag IO takes value 1, it indicates that the current node supports IOAM information, and when Flag IO takes value 0, it indicates that the current node does not support IOAM information.

A flag bit (not shown) of a fifth preset position is configured to identify whether the node supports coloring information. For example, when the flag bit of the fifth preset position takes value 1, it indicates that the current node supports coloring information, and when the flag bit of the fifth preset position takes value 0, it indicates that the current node does not support coloring information.

A flag bit (Flag ME) of a sixth preset position is configured to identify whether the node supports a multi-purpose entropy label capability. For example, when Flag ME takes value 1, it indicates that the current node supports an entropy label capability, and when Flag ME takes value 0, it indicates that the current node does not support an entropy label capability.

A flag bit (not shown) of a seventh preset position is configured to identify whether the node supports application information. For example, when the flag bit of the seventh preset position takes value 1, it indicates that the current node supports certain application information, and when the flag bit of the seventh preset position takes value 0, it indicates that the current node does not support certain application information.

By parsing the Flag S, the controller can determine whether the corresponding node supports a slice capability; by parsing the Flag F, the controller can determine whether the corresponding node supports a flow identification capability; by parsing the Flag I, the controller can determine whether the corresponding node supports an intent capability; by parsing the Flag IO, the controller can determine whether the corresponding node supports IOAM information; by parsing the flag bit of the fifth preset position, the controller can determine whether the corresponding node supports coloring information; by parsing the Flag ME, the controller can determine whether the corresponding node supports an entropy label capability; and by parsing the flag bit of the seventh preset position, the controller can determine whether the corresponding node supports certain application information.

As described above, the network node may enable the node service related information carried in the primary message to further include label depth information by extending the BGP-LS protocol. The extended Node MSD sub-TLV may be used to carry a readable label depth value of a multi-purpose label.

Accordingly, according to the extended BGP-LS protocol, the controller may parse a portion corresponding to the extended Node MSD sub-TLV in the primary message, to determine a readable label depth value of a multi-purpose label for a corresponding node.

In some implementations, the second routing protocol includes PCEP. In other words, the network node may send the node related information of the node to the controller in the form of a primary message by extending the second PCEP. In this implementation, the second extension protocol defines a TLV extended on the routing protocol, and the node service capability related information is carried by the TLV extended on the second extension protocol. Therefore, in the operation of parsing the extension in the primary message, the controller may parse a portion corresponding to the extended TLV of the second extension protocol in the primary message, to obtain the node service related information of the corresponding node.

Further, the TLV of the second extension protocol includes an extended PCE capability sub-TLV, the node service capability related information is carried by the PCE capability sub-TLV, and the PCE capability sub-TLV is carried in an open message. In other words, the primary message is in the form of an open message. The controller may parse the PCE capability sub-TLV in the open message, to obtain the corresponding node service capability related information.

Further, the node service capability related information is carried by flag bits in the extended LSP-EXTENDED-FLAG TLV.

In some implementations, the primary message further carries support information which is information characterizing that the controller is supported to insert service information into the computed SR path. The information processing method may further include: parse the support information to determine service information supported to be inserted in an SR path by the corresponding node.

As described above, while sending the support information to the controller through an extension protocol, the node may define at least one new flag bit in the extended sub-TLV, where each new flag bit corresponds to one service and is configured to advertise to the controller that the current node supports the controller to insert corresponding service information in the computed SR path.

A flag bit (Flag S) of a first preset position is configured to identify that the node supports the controller to insert slice information in the computed SR path.

A flag bit (Flag F) of a second preset position is configured to identify that the node supports the controller to insert flow identification information in the computed SR path.

A flag bit (Flag I) of a third preset position is configured to identify that the node supports the controller to insert intent information in the computed SR path.

A flag bit (Flag IO) of a fourth preset position is configured to identify that the node supports the controller to insert IOAM information in the computed SR path.

A flag bit (not shown) of a fifth preset position is configured to identify that the node supports the controller to insert coloring information in the computed SR path.

A flag bit (Flag ME) of a sixth preset position is configured to identify that the node supports the controller to insert entropy label information in the computed SR path.

A flag bit (not shown) of a seventh preset position is configured to identify that the node supports the controller to insert application information in the computed SR path.

Accordingly, by parsing the Flag S, the controller can judge whether the corresponding node supports the controller to insert slice information in the computed SR path; by parsing the Flag F, the controller can judge whether the corresponding node supports the controller to insert flow identification information in the computed SR path; by parsing the Flag I, the controller can judge whether the corresponding node supports the controller to insert intent information in the computed SR path; by parsing the Flag IO, the controller can judge whether the corresponding node supports the controller to insert IOAM information in the computed SR path; by parsing the flag bit of the fifth preset position, the controller can judge whether the corresponding node supports the controller to insert coloring information in the computed SR path; by parsing the Flag ME, the controller can judge whether the corresponding node supports the controller to insert entropy label information in the computed SR path; and by parsing the flag bit of the seventh preset position, the controller can judge whether the corresponding node supports the controller to insert certain application information in the computed SR path.

In some implementations, the target message further includes service insertion position information, the first routing protocol includes BGP, the first extension protocol defines extended Segment Sub-TLVs in which different flag bits are configured to identify different types of service information, and the service insertion position information is configured to advertise that the service information is inserted after a corresponding SID.

In some implementations, a service corresponding to the node service related information is selected from a group consisting of: a slice, a flow, an intent, IOAM information, entropy label information, coloring information, and an application.

In some implementations, the flag bit in an extension area defined by the first extension protocol includes at least one of a first preset position, a second preset position, a third preset position, a fourth preset position, a fifth preset position, a sixth preset position, or a seventh preset position.

The flag bit of the first preset position is configured to identify capability information of supporting insertion of a slice in the computed SR path.

The flag bit of the second preset position is configured to identify capability information of supporting insertion of a flow identification in the computed SR path.

The flag bit of the third preset position is configured to identify capability information of supporting insertion of an intent in the computed SR path.

The flag bit of the fourth preset position is configured to identify capability information of supporting insertion of IOAM information in the computed SR path.

The flag bit of the fifth preset position is configured to identify capability information of supporting insertion of coloring information in the computed SR path.

The flag bit of the sixth preset position is configured to identify capability information of supporting insertion of an entropy label in the computed SR path.

The flag bit of the seventh preset position is configured to identify capability information of supporting insertion of application information in the computed SR path.

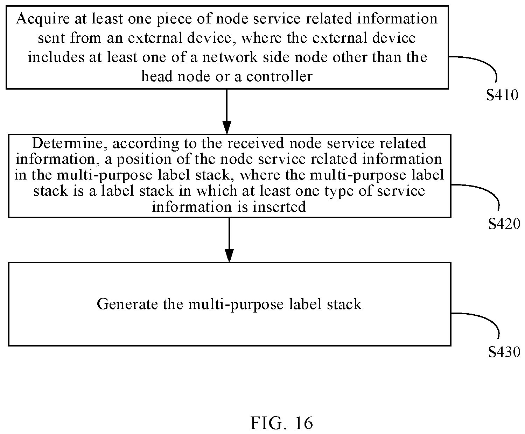

As a fourth aspect of the present disclosure, there is provided a generation method for a multi-purpose label stack, which is applied to a head node in network nodes and, as shown in FIG. 16, includes operations S410 to S430.

At operation S410, at least one piece of node service related information sent from an external device is acquired, where the external device includes at least one of a network node other than the head node or a controller.

At operation S420, a position of the node service related information in the multi-purpose label stack is determined according to the acquired node service related information, where the multi-purpose label stack is a label stack in which at least one type of service information is inserted.

At operation S430, the multi-purpose label stack is generated.

When generating the multi-purpose label stack, the head node uses the node service related information sent from the network node or the controller instead of a multi-purpose label. In other words, the head node can acquire information on services supported by other devices without depending on a multi-purpose label, thereby solving the problem that the multi-purpose label technology is not supported in an MPLS network.

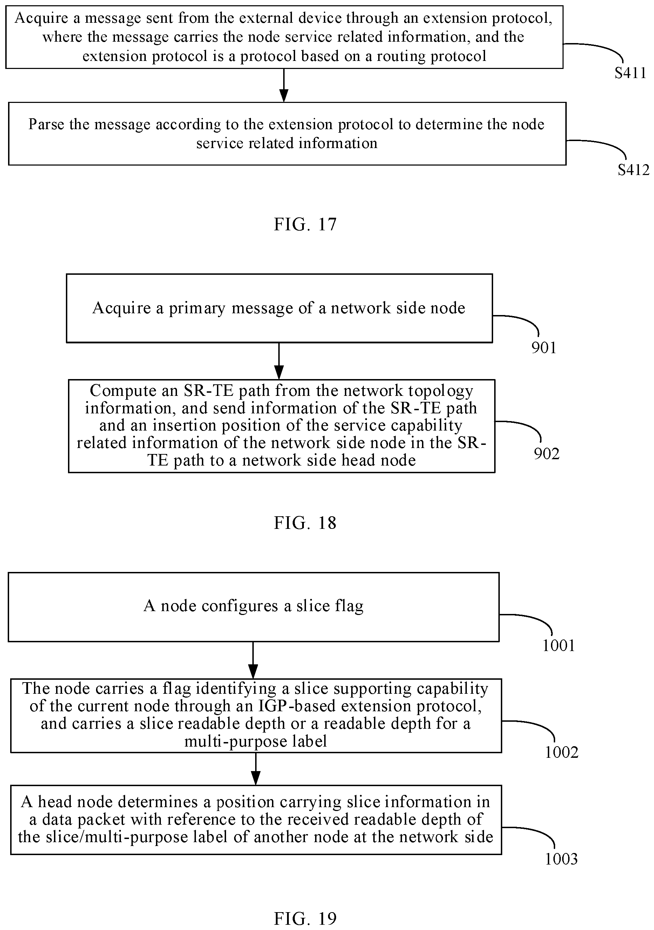

In the present disclosure, how to obtain the node service related information is not particularly limited. In some implementations, as shown in FIG. 17, operation S410 may include operations S411 and S422.

At operation S411, a message sent from the external device through an extension protocol is acquired, where the message carries the node service related information, and the extension protocol is a protocol based on a routing protocol.

At operation S422, the message is parsed according to the extension protocol to determine the node service related information.

The information processing method according to the first aspect of the present disclosure describes in detail how a network node sends a message carrying node service related information to a head node through an extension protocol, and the information processing method according to the third aspect of the present disclosure describes in detail how a controller sends a message carrying node service related information to a head node through an extension protocol.

The operation S422 may be specifically executed as the information processing method according to the second aspect of the present disclosure.

As described above, the node service related information includes at least one of: node service capability related information, service insertion position information or label depth information.

Similar to the above, the service insertion position information is configured to characterize a position in the path of at least one type of service information determined by the controller; the label depth information includes a readable label depth corresponding to each service capability supported by a corresponding node, or the label depth information includes a readable depth of a multi-purpose label carrying various service capabilities supported by the corresponding node.

Similar to the above, the node service capability related information includes at least one of: service capability identification information of at least one service supported by the corresponding node, processing mode information of a service supported by the corresponding node, or length information of service auxiliary data processable by the corresponding node.

The processing mode information includes at least one of: discarding the received packet, uploading the received packet to a control plane, or skipping service information characterized by node service capability related information carried in the received packet.

As described above, the node service related information includes the node service capability related information, the routing protocol includes IGP, the external device includes a network node other than the head node, the extension protocol has a type-length-value (TLV) extended on the routing protocol.

Accordingly, operation S422 may be specifically performed as:
parsing a portion corresponding to the TLV of the extension protocol in the received message, to obtain the node service related information.

In some implementations, the IGP is an ISIS protocol, and parsing the portion corresponding to the TLV of the extension protocol in the received message includes:
parsing a portion corresponding to the TLV of the extension protocol in a routing capability TLV, and/or parsing a portion corresponding to the TLV of the extension protocol in a Prefix Attribute Flags TLV.

In some implementations, the IGP is an OSPF protocol, and parsing the portion corresponding to the TLV of the extension protocol in the received message includes:
parsing a TLV in OSPFv3/OSPFv2 Router Information Opaque LSA; and/or parsing a portion corresponding to the extended TLV of the extension protocol in OSPF v2/v3 variable length Prefix attributes Sub-TLVs.

The above describes how the head node obtains the node service related information from the message sent from the network device when the external device is a network node. The following explains how the head node obtains the node service related information from the message sent from the controller when the external device is a controller.

In some implementations, the node service related information includes the service insertion position information, and the routing protocol includes BGP or PCEP.

In an implementation where the routing protocol is PCEP, the extended TLV of the extension protocol includes an extended segment routing-explicit route object (SR-ERO object), different flag bits in the extended SR-ERO object are configured to characterize service insertion position information corresponding to different pieces of service information.

Accordingly, acquiring at least one piece of node service related information sent from the external device includes:
parsing different flag bits of a portion corresponding to the extended SR-ERO object in the received message, to determine service insertion position information advertised by the controller, and service information to be inserted after a corresponding SID.

In an implementation where the routing protocol is BGP, the extended TLV of the extension protocol includes Segment Sub-TLVs, and different flag bits in the extended Segment Sub-TLVs are configured to characterize service insertion position information corresponding to different pieces of service information.

Accordingly, acquiring at least one piece of node service related information sent from the external device includes:
parsing different flag bits of a portion corresponding to the extended Segment Sub-TLVs in the received message, to determine service insertion position information advertised by the controller, and service information to be inserted after a corresponding SID.

In the present disclosure, how to determine the position of the node service related information in the multi-purpose label stack is not particularly limited, and in some implementations, the node service related information further includes the label depth information, and accordingly, the position of the node service related information in the multi-purpose label stack is determined from the label depth information.

Similar to the above, a service corresponding to the node service related information is selected from a group consisting of:
a slice, a flow, an intent, IOAM information, entropy label information, coloring information, and an application.

Accordingly, the node service related information is identified by a flag bit of at least one preset position of a flag field in an extension of the extension protocol.

In some implementations, the at least one preset position includes at least one of a first preset position, a second preset position, a third preset position, a fourth preset position, a fifth preset position, a sixth preset position, or a seventh preset position.

Information of the first preset position is configured to identify whether the node supports a slice capability.

Information of the second preset position is configured to identify whether the node supports a flow identification capability.

Information of the third preset position is configured to identify whether the node supports an intent capability.

Information of the fourth preset position is configured to identify whether the node supports IOAM information.

Information of the fifth preset position is configured to identify whether the node supports coloring information.

Information of the sixth preset position is configured to identify whether the node supports a multi-purpose entropy label capability.

Information of the seventh preset position is configured to identify whether the node supports application information.

As a fifth aspect of the present disclosure, there is provided a network node, including: a first storage module having a first computer-executable program stored thereon; and at least one first processor which, when calling the first computer-executable program, implements the information processing method according to the first and/or second aspect of the present disclosure.

As a sixth aspect of the present disclosure, there is provided a head node, including: a second storage module having a second computer-executable program stored thereon; and at least one second processor which, when calling the second computer-executable program, implements the generation method according to the fourth aspect of the present disclosure.

As a seventh aspect of the present disclosure, there is provided a controller, including: a third storage module having a third computer-executable program stored thereon; and at least one third processor which, when calling the third computer-executable program, implements the information processing method according to the third aspect of the present disclosure.

As an eighth aspect of the present disclosure, there is provided a computer-readable storage medium having a computer-executable program stored thereon which, when called, causes any of the above methods of the present disclosure to be implemented.

### First Example

This example provides an implementation of an information processing method, which is executed by a controller and, as shown in FIG. 18, includes operations S901 and S902.

At operation 901: acquiring a primary message of a network node, where the primary message carries topology information, node service capability related information, and label depth information of the node. The label depth information is a readable depth of the node for a slice service, and the primary message of the network node is obtained through an extension protocol based on a BGP-LS protocol or PCEP.

At operation 902: computing an SR-TE path from the network topology information, and sending information of the SR-TE path and an insertion position of the service capability related information of the network node in the SR-TE path to a network head node.

Sending information of the SR-TE path and the insertion position of the service capability related information of the network node in the SR-TE path to the network head node includes: sending information of the SR-TE path and an insertion position of the service capability related information of the network node in the SR-TE path to a network head node through an extension protocol based on PCEP or BGP.

### Second Example

This example provides an implementation of an information processing method performed by a network node, where the node service capability supported by the node is a slice capability.

This implementation enables advertising to other network nodes the slice supporting capability of the current node, and a readable label depth of the current node for a multi-purpose label representing the slice capability. This implementation also enables advertising to a controller the slice supporting capability of the current node, and a readable label depth of the current node for a multi-purpose label representing the slice capability.

In some implementations, the current node may advertise to other network nodes the slice supporting capability of the current node, and a readable label depth of the current node for a multi-purpose label representing the slice capability through an IGP-based extension protocol; and the current node may advertise to the controller the slice supporting capability of the current node, and a readable label depth of the current node for a multi-purpose label representing the slice capability through an extension protocol based on BGP-LS or PCEP.

This example shows the advertisement of capability and readable depth between nodes, which, as shown in FIG. 19, includes operations 1001, 1002, and 1003.

In operation 1001: a node configures a slice identification.

In operation 1002: the node carries a flag identifying a slice supporting capability of the current node through an IGP-based extension protocol, and carries a slice readable depth or a readable depth for a multi-purpose label.

The node carries a flag bit identifying the slice supporting capability of the node through an IGP-based extension protocol.

The routing protocol may be extended in two ways to implement the advertisement of the "slice supporting capability of the node": one involves advertising the slice supporting capability of the node with node capability advertisement, and the other involves advertising the slice supporting capability of the node with prefix advertisement. The two extensions are used separately in some scenarios, and combined in some other scenarios. The detailed extension may refer to the foregoing description about the IGP extension in the first example.

The slice readable depth or the readable depth for a multi-purpose label may be carried in two manners.

There are two extension modes. One involves advertising the readable label depth for each application/service, as shown FIG. 5; and the other involves advertising the readable label depth of a multi-purpose label, as shown in FIG. 6, which is applicable to all new extended applications/services, including but not limited to slices, flow identifications, detection and coloring, intents, and the like.

In operation 1003: a network head node determines a position carrying slice information in a data packet with reference to the received readable depth of the slice/multi-purpose label of another network node.

It should be noted that the "data packet" here refers to a data packet including a multi-purpose label stack.

### Third Example

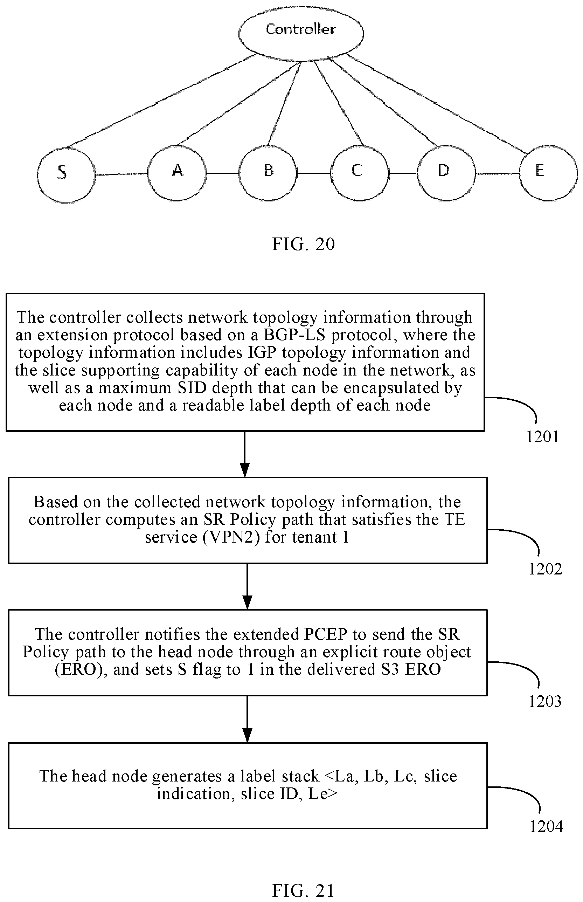

FIG. 20 is a network topology according to the present disclosure. In FIG. 20, it is assumed that a PCEP session is established between a controller and a network head node S, and a slice orchestrator is desired to establish a TE service (VPN2) satisfying tenant 1.

As shown in FIG. 21, an implementation of the information processing method provided in this example includes operations 1201, 1202, 1203, and 1204.

In operation 1201, the controller collects network topology information through an extension protocol based on a BGP-LS protocol, where the topology information includes IGP topology information and the slice supporting capability of each node in the network, as well as a maximum SID depth that can be encapsulated by each node and a readable label depth of each node. It is assumed that the maximum SID depth that can be encapsulated by each node is 10 and the readable label depth of each node is 5.

In operation 1202, based on the collected network topology information, the controller computes an SR Policy path that satisfies the TE service (VPN2) for tenant 1. It is assumed that the SR Policy path is <A, B, C, D, E>.

In operation 1203, the controller notifies the extended PCEP to send the SR Policy path to the head node through an explicit route object (ERO), and sets S flag to 1 in the delivered S3 ERO.

As an extended flag in the present disclosure, S flag is configured to identify that slice information is inserted after the SID.

The PCEP describes the segment list with an SR-ERO, where the ERO includes one or more ERO sub-objects in order. Each ERO sub-object represents a segment node or a joining segment, which, as shown in FIG. 9, is an encapsulation format of the PCEP extension. In this example, an extended S flag is used, and the S-Flag taking value 0 indicates that slice information is not inserted after the segment, and the S-Flag taking value 1 indicates that slice information is inserted after the segment.

In some implementations, the slice information insertion position information may be advertised through an BGP-based extension protocol, where the BGP is specifically extended by: extending a flag bit in Segment Sub-TLVs, defining and setting Flag S to identify that slice information is inserted after the segment.

In operation 1204, the head node generates a label stack <La, Lb, Lc, slice indication, slice ID, Le>.

Those of ordinary skill in the art will appreciate that all or some operations of the above described method, functional modules/units in the apparatus may be implemented as software, firmware, hardware, and suitable combinations thereof. In a hardware implementation, the division between the functional modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and communication medium (or transitory medium). As is well known to those of ordinary skill in the art, the term computer storage medium includes volatile and nonvolatile, removable and non-removable medium implemented in any method or technology for storing information, such as computer-readable instructions, data structures, program modules or other data. The computer storage medium includes, but is not limited to, an RAM, an ROM, an EEPROM, a flash or any other memory technology, a CD-ROM, a digital versatile disk (DVD) or any other optical disk storage, a magnetic cartridge, a magnetic tape, a magnetic disk storage or any other magnetic storage device, or may be any other medium used for storing the desired information and accessible by a computer. Moreover, it is well known to those ordinary skilled in the art that a communication medium typically includes a computer-readable instruction, a data structure, a program module, or other data in a modulated data signal, such as a carrier wave or other transport mechanism, and may include any information delivery medium.

The present disclosure has disclosed exemplary embodiments, and although specific terms are employed, they are used and should be interpreted merely in a generic and descriptive sense, not for purposes of limitation. In some instances, features, characteristics and/or elements described in connection with a particular embodiment may be used alone, or may be used in combination with features, characteristics and/or elements described in connection with other embodiments, unless expressly stated otherwise, as would be apparent to one skilled in the art. It will, therefore, be understood by those skilled in the art that various changes in form and details may be made therein without departing from the scope of the present disclosure as set forth in the appended claims.

## Claims

1. An information processing method applied to a network node, comprising:
sending, through an extension protocol, a primary message carrying node service related information to a target device, wherein the extension protocol is a protocol based on a routing protocol.

2. The information processing method according to claim 1, wherein the node service related information comprises at least one of:
node service capability related information or label depth information, wherein
the label depth information comprises a readable label depth corresponding to each service capability supported by a current node, or the label depth information comprises a readable depth of a multi-purpose label carrying various service capabilities supported by the current node.

3. The information processing method according to claim 2, wherein the node service capability related information comprises at least one of: service capability identification information of at least one service supported by the current node, processing mode information of a service supported by the current node, or length information of service auxiliary data processable by the current node, wherein
the processing mode information comprises at least one of: discarding a received packet, uploading a received packet to a control plane, or skipping node service related information carried in a received packet.

4. The information processing method according to claim 2, wherein the node service related information comprises the node service capability related information, the target device is a network node other than the current node, the routing protocol comprises an interior gateway protocol (IGP), and the extension protocol has a type-length-value (TLV) extended on the routing protocol; and
the node service capability related information is carried by the TLV of the extension protocol.

5. The information processing method according to claim 4, wherein the IGP comprises an intermediate system to intermediate system (ISIS) protocol, and position information of the node service capability related information comprises at least one of:
information indicating that the TLV carrying the node service capability related information is in a routing capability TLV; or, information indicating that the node service capability related information is in a Prefix Attribute Flags TLV.

6. The information processing method according to claim 4, wherein the IGP comprises an open shortest path first (OSPF) protocol, and position information of the node service capability related information comprises at least one of:
information indicating that the TLV carrying the node service capability related information is in OSPFv3/OSPFv2 Router Information Opaque Link State Advertisement (LSA); or, information indicating that the node service capability related information is in OSPF v2/v3 variable length Prefix attributes Sub-TLVs.

7. The information processing method according to claim 2, wherein the target device is a controller, and the routing protocol comprises border gateway protocol-link-state (BGP-LS).

8. The information processing method according to claim 7, wherein the node service related information comprises the node service capability related information, the extension protocol has an extended BGP-LS attribute extended on the routing protocol, and the node service capability related information is carried by the extended BGP-LS attribute.

9. The information processing method according to claim 8, wherein position information of the node service capability related information comprises at least one of:
information indicating that the extended BGP-LS attribute is a node attribute, and the node service capability related information is carried by a TLV of the node attribute; or, information indicating that the extended BGP-LS attribute is a prefix attribute, and the node service capability related information is carried by a TLV of the prefix attribute.

10. The information processing method according to claim 2, wherein the target device is a controller, the node service related information comprises the node service capability related information, the routing protocol comprises an extended path computation element communication protocol (PCEP), the extension protocol has a TLV extended on the routing protocol, and the node service capability related information is carried by the TLV of the extension protocol.

11. The information processing method according to claim 10, wherein the TLV of the extension protocol comprises an extended path computation element (PCE) capability sub-TLV, the node service capability related information is carried by the PCE capability sub-TLV, and the PCE capability sub-TLV is carried in an open message.

12. The information processing method according to claim 10, wherein the node service capability related information is carried by flag bits in an extended LSP-EXTENDED-FLAG TLV to request a controller to insert the node service capability related information in a segment routing (SR) path.

13. The information processing method according to claim 10, wherein the primary message further carries support information which is information characterizing that the controller is supported to insert service information into a computed SR path.

14. The information processing method according to any one of claims 1 to 13, wherein the node service related information is configured to characterize that a current node supports at least one of the following services:
a slice, a flow, an intent, inband operation administration and maintenance (IOAM) information, entropy label information, coloring information, or an application.

15. The information processing method according to claim 14, wherein the node service related information is identified by a flag bit of at least one preset position of a flag field in an extension of the extension protocol.

16. The information processing method according to claim 15, wherein the at least one preset position comprises at least one of a first preset position, a second preset position, a third preset position, a fourth preset position, a fifth preset position, a sixth preset position, or a seventh preset position, wherein
information of the first preset position is configured to identify whether a node supports a slice capability;
information of the second preset position is configured to identify whether the node supports a flow identification capability;
information of the third preset position is configured to identify whether the node supports an intent capability;
information of the fourth preset position is configured to identify whether the node supports IOAM information;
information of the fifth preset position is configured to identify whether the node supports coloring information;
information of the sixth preset position is configured to identify whether the node supports a multi-purpose entropy label capability; and
information of the seventh preset position is configured to identify whether the node supports application information.

17. An information processing method applied to a network node, comprising:
receiving a primary message sent from a device other than a current node; and
parsing the received primary message according to an extension protocol to obtain node service related information carried in the primary message, wherein the extension protocol is a protocol based on a routing protocol.

18. The information processing method according to claim 17, wherein the node service related information comprises at least one of:
node service capability related information, service insertion position information, or label depth information of a corresponding node, wherein
the service insertion position information is configured to characterize a position in a path of at least one type of service information determined by the controller,
the label depth information comprises a readable label depth corresponding to each service capability supported by a current node, or the label depth information comprises a readable depth of a multi-purpose label carrying various service capabilities supported by the current node.

19. The information processing method according to claim 18, wherein the node service capability related information comprises at least one of: service capability identification information of at least one service supported by the corresponding node, processing mode information of a service supported by the corresponding node, or length information of service auxiliary data processable by the corresponding node, wherein
the processing mode information comprises at least one of: discarding a received packet, uploading a received packet to a control plane, or skipping node service related information carried in a received packet.

20. The information processing method according to claim 18, wherein the device comprises a network node other than the current node, the routing protocol comprises IGP, and the extension protocol has a TLV extended on the routing protocol, and
parsing the received primary message according to the extension protocol comprises: parsing a portion corresponding to the TLV of the extension protocol in the primary message to obtain node service capability related information in the node service related information.

21. The information processing method according to claim 20, wherein the IGP comprises an ISIS protocol, and parsing the received primary message according to the extension protocol comprises at least one of: parsing a portion corresponding to the TLV of the extension protocol in a routing capability TLV according to the extension protocol; or parsing a portion corresponding to the TLV of the extension protocol in a Prefix Attribute Flags TLV.

22. The information processing method according to claim 20, wherein the IGP comprises an open shortest path first (OSPF) protocol, and parsing the received primary message according to the extension protocol comprises at least one of:
parsing a portion corresponding to the TLV of the extension protocol in an OSPFv3/OSPFv2 Router Information Opaque LSA; or parsing a portion corresponding to the TLV of the extension protocol in the OSPF v2/v3 variable length Prefix attributes Sub-TLVs.

23. The information processing method according to claim 18, wherein the device comprises a controller.

24. The information processing method according to claim 23, wherein the routing protocol comprises PCEP, the extension protocol defines an extended TLV extended on the routing protocol, and parsing the received primary message according to the extension protocol comprises:
parsing a portion corresponding to the extended TLV of the extension protocol in the primary message.

25. The information processing method according to claim 24, wherein the extended TLV of the extension protocol comprises an extended PCE capability sub-TLV, the received primary message is an open message, and parsing the extended TLV of the extension protocol comprises: parsing the PCE capability sub-TLV carried in the open message.

26. The information processing method according to claim 24, wherein the extended TLV of the extension protocol comprises an extended LSP-EXTENDED-FLAG TLV, and parsing the extended TLV of the extension protocol comprises: parsing flag bits of a portion corresponding to the extended LSP-EXTENDED-FLAG TLV.

27. The information processing method according to claim 24, wherein the routing protocol comprises PCEP, the extended TLV of the extension protocol comprises an extended segment routing-explicit route object (SR-ERO object), the node service related information comprises the service insertion position information, and parsing the received primary message according to the extension protocol comprises:
parsing flag bits of a portion corresponding to the extended SR-ERO object in the primary message, to determine service insertion position information advertised by the controller, and service information to be inserted after a corresponding segment identifier (SID).

28. The information processing method according to claim 23, wherein the routing protocol comprises Border Gateway Protocol (BGP), the node service related information comprises the service insertion position information, the extension protocol has extended Segment Sub-TLVs in which different flag bits are configured to identify different service information, and parsing the received primary message according to the extension protocol further comprises:
parsing flag bits of a portion corresponding to the extended Segment Sub-TLVs in the primary message, to determine service insertion position information advertised by the controller, and service information to be inserted after a corresponding SID.

29. The information processing method according to any one of claims 17 to 28, wherein a service corresponding to the node service related information is selected from a group consisting of:
a slice, a flow, an intent, IOAM information, entropy label information, coloring information, and an application.

30. The information processing method according to claim 29, wherein the node service related information is identified by a flag bit of at least one preset position of a flag field in an extension of the extension protocol, and parsing the received primary message according to the extension protocol comprises: parsing the flag bit of the at least one preset position of the flag field in the extension of the extension protocol in the primary message.

31. The information processing method according to claim 30, wherein the at least one preset position comprises at least one of a first preset position, a second preset position, a third preset position, a fourth preset position, a fifth preset position, a sixth preset position, or a seventh preset position, wherein
information of the first preset position is configured to identify whether a node supports a slice capability;
information of the second preset position is configured to identify whether the node supports a flow identification capability;
information of the third preset position is configured to identify whether the node supports an intent capability;
information of the fourth preset position is configured to identify whether the node supports IOAM information;
information of the fifth preset position is configured to identify whether the node supports coloring information;
information of the sixth preset position is configured to identify whether the node supports a multi-purpose entropy label capability; and
information of the seventh preset position is configured to identify whether the node supports application information.

32. An information processing method applied to a controller, comprising:
sending a target message carrying at least one piece of node service related information to at least one network node through a first extension protocol, wherein the first extension protocol is a protocol based on a first routing protocol.

33. The information processing method according to claim 32, wherein the node service related information comprises at least one of:
node service capability related information, service insertion position information, or label depth information, wherein
the service insertion position information is configured to characterize a position in a path of at least one type of service information determined by a current controller,
the label depth information comprises a readable label depth corresponding to each service capability supported by a node, or the label depth information comprises a readable depth of a multi-purpose label carrying various service capabilities supported by a node.

34. The information processing method according to claim 33, wherein the node service capability related information comprises at least one of: service capability identification information of at least one service supported by a node, processing mode information of a service supported by a node, or length information of service auxiliary data processable by a node, wherein
the processing mode information comprises at least one of: discarding a received packet, uploading a received packet to a control plane, or skipping service information **characterized by** node service capability related information carried in a received packet.

35. The information processing method according to claim 33, wherein the first extension protocol has a TLV extended on the first routing protocol, the node service related information is carried by the extended TLV of the first extension protocol, and the first routing protocol is selected from any one of:
BGP or PCEP.

36. The information processing method according to claim 35, wherein the first routing protocol comprises PCEP, the TLV of the first extension protocol comprises an extended PCE capability sub-TLV, the node service related information is carried by the PCE capability sub-TLV, and the PCE capability sub-TLV is carried in an open message.

37. The information processing method according to claim 35, wherein the node service related information comprises the node service capability related information, the first routing protocol comprises PCEP, the TLV of the first extension protocol comprises an extended LSP-EXTENDED-FLAG TLV, and the node service capability related information is carried by flag bits in the extended LSP-EXTENDED-FLAG TLV, to insert node service capability related information corresponding to a node in an SR path.

38. The information processing method according to claim 35, wherein the node service related information comprises the service insertion position information, and the first routing protocol comprises PCEP, wherein the TLV of the first extension protocol comprises an extended segment routing-explicit route object (SR-ERO object) in which different flag bits are configured to characterize service insertion position information corresponding to different pieces of service information, so as to advertise service information to be inserted after a corresponding SID through the target message.

39. The information processing method according to claim 33, wherein the node service related information is carried in a primary message sent from a network node, and the information processing method comprises:
before sending the target message carrying at least one piece of node service related information to at least one network node through the first extension protocol, receiving the primary message sent from the network node through a second extension protocol, wherein the second extension protocol is a protocol based on a second routing protocol, and the second extension protocol has an extension with respect to the second routing protocol; and
parsing an extension in the primary message according to the second extension protocol to obtain the node service related information.

40. The information processing method according to claim 39, wherein the node service related information comprises the node service capability related information, the second routing protocol comprises a BGP-LS protocol, the second extension protocol has an extended BGP-LS attribute, and parsing the extension in the primary message according to the second extension protocol comprises: parsing a portion corresponding to the extended BGP-LS attribute in the primary message, to obtain the node service capability related information.

41. The information processing method according to claim 40, wherein parsing the portion corresponding to the extended BGP-LS attribute in the primary message according to the second extension protocol comprises at least one of: parsing a TLV of a node attribute; or, parsing a TLV of an extended prefix attribute.

42. The information processing method according to claim 39, wherein the second routing protocol comprises PCEP, the second extension protocol defines an extended TLV extended on the second routing protocol, the node service capability related information is carried by the extended TLV of the second extension protocol, and parsing the extension in the primary message comprises: parsing a portion corresponding to the extended TLV of the second extension protocol in the primary message.

43. The information processing method according to claim 42, wherein the TLV of the second extension protocol comprises an extended PCE capability sub-TLV, the node service capability related information is carried by the PCE capability sub-TLV, and the PCE capability sub-TLV is carried in an open message.

44. The information processing method according to claim 42, wherein the node service capability related information is carried by flag bits in an extended LSP-EXTENDED-FLAG TLV.

45. The information processing method according to claim 42, wherein the primary message further carries support information which is information characterizing that the controller is supported to insert service information into a computed SR path.

46. The information processing method according to claim 35, wherein the node service related information comprises the service insertion position information, the first routing protocol comprises BGP, the first extension protocol has extended Segment Sub-TLVs in which different flag bits are configured to characterize service insertion position information corresponding to different services, so as to advertise service information to be inserted after a corresponding SID through the target message.

47. The information processing method according to any one of claims 32 to 46, wherein a service corresponding to the node service related information is selected from a group consisting of:
a slice, a flow, an intent, IOAM information, entropy label information, coloring information, and an application.

48. The information processing method according to claim 47, wherein the node service related information is identified by a flag bit of at least one preset position of a flag field in an extension of the first extension protocol, and the flag field in the extension of the first extension protocol comprises at least one of a first preset position, a second preset position, a third preset position, a fourth preset position, a fifth preset position, a sixth preset position, or a seventh preset position, wherein
a flag bit of the first preset position is configured to identify capability information of supporting insertion of a slice in a computed SR path;
a flag bit of the second preset position is configured to identify capability information of supporting insertion of a flow identification in the computed SR path;
a flag bit of the third preset position is configured to identify capability information of supporting insertion of an intent in the computed SR path;
a flag bit of the fourth preset position is configured to identify capability information of supporting insertion of IOAM information in the computed SR path;
a flag bit of the fifth preset position is configured to identify capability information of supporting insertion of coloring information in the computed SR path;
a flag bit of the sixth preset position is configured to identify capability information of supporting insertion of an entropy label in the computed SR path; and
a flag bit of the seventh preset position is configured to identify capability information of supporting insertion of application information in the computed SR path.

49. A generation method for a multi-purpose label stack, which is applied to a head node in network nodes and comprises:
acquiring at least one piece of node service related information sent from an external device, wherein the external device comprises at least one of a network node other than the head node or a controller;
determining, according to acquired node service related information, a position of the node service related information in the multi-purpose label stack, wherein the multi-purpose label stack is a label stack in which at least one type of service information is inserted; and
generating the multi-purpose label stack.

50. The generation method according to claim 49, wherein acquiring at least one piece of node service related information sent from the external device comprises:
acquiring a message sent from the external device through an extension protocol, wherein the message carries the node service related information, and the extension protocol is a protocol based on a routing protocol; and
parsing the message according to the extension protocol to determine the node service related information.

51. The generation method according to claim 50, wherein the node service related information comprises at least one of:
node service capability related information, service insertion position information, or label depth information, wherein
the service insertion position information is configured to characterize a position in a path of at least one type of service information determined by the controller; and
the label depth information comprises a readable label depth corresponding to each service capability supported by a corresponding node, or the label depth information comprises a readable depth of a multi-purpose label carrying various service capabilities supported by the corresponding node.

52. The generation method according to claim 51, wherein the node service capability related information comprises at least one of: service capability identification information of at least one service supported by the corresponding node, processing mode information of a service supported by the corresponding node, or length information of service auxiliary data processable by the corresponding node, wherein
the processing mode information comprises at least one of: discarding a received packet, uploading a received packet to a control plane, or skipping service information **characterized by** node service capability related information carried in a received packet.

53. The generation method according to claim 52, wherein the external device comprises a network node other than the head node, the node service related information comprises the node service capability related information, the routing protocol comprises IGP, the external device comprises a network node other than the head node, and the extension protocol has a type-length-value (TLV) extended on the routing protocol; and
parsing the message according to the extension protocol to determine the node service related information comprises:
parsing a portion corresponding to the TLV of the extension protocol in the acquired message, to obtain the node service related information.

54. The generation method according to claim 53, wherein the IGP comprises an ISIS protocol, and parsing the portion corresponding to the TLV of the extension protocol in the acquired message comprises at least one of:
parsing a portion corresponding to the TLV of the extension protocol in a routing capability TLV; or parsing a portion corresponding to the TLV of the extension protocol in a Prefix Attribute Flags TLV.

55. The generation method according to claim 53, wherein the IGP comprises an OSPF protocol, and parsing the portion corresponding to the TLV of the extension protocol in the acquired message comprises at least one of:
parsing a TLV in OSPFv3/OSPFv2 Router Information Opaque LSA; or parsing a portion corresponding to the extended TLV of the extension protocol in OSPF v2/v3 variable length Prefix attributes Sub-TLVs.

56. The generation method according to claim 52, wherein the external device comprises a controller, the node service related information comprises the service insertion position information, and the routing protocol comprises BGP or PCEP.

57. The generation method according to claim 56, wherein the routing protocol comprises PCEP, and the extended TLV of the extension protocol comprises an extended segment routing-explicit route object (SR-ERO object),
different flag bits in the extended SR-ERO object are configured to characterize service insertion position information corresponding to different pieces of service information, and
acquiring at least one piece of node service related information sent from the external device comprises:
parsing different flag bits of a portion corresponding to the extended SR-ERO object in the acquired message, to determine service insertion position information advertised by the controller, and service information to be inserted after a corresponding SID.

58. The generation method according to claim 56, wherein the routing protocol comprises BGP, the extended TLV of the extension protocol comprises Segment Sub-TLVs, and different flag bits in the extended Segment Sub-TLVs are configured to characterize service insertion position information corresponding to different pieces of service information, and
acquiring at least one piece of node service related information sent from the external device comprises:
parsing different flag bits of a portion corresponding to the extended Segment Sub-TLVs in the acquired message, to determine service insertion position information advertised by the controller, and service information to be inserted after a corresponding SID.

59. The generation method according to any one of claims 51 to 58, wherein the node service related information further comprises the label depth information according to which a position of the node service related information in the multi-purpose label stack is determined.

60. The generation method according to any one of claims 51 to 58, wherein a service corresponding to the node service related information is selected from a group consisting of:
a slice, a flow, an intent, IOAM information, entropy label information, coloring information, and an application.

61. The generation method according to claim 60, wherein the node service related information is identified by a flag bit of at least one preset position of a flag field in an extension of the extension protocol.

62. The generation method according to claim 61, wherein the at least one preset position comprises at least one of a first preset position, a second preset position, a third preset position, a fourth preset position, a fifth preset position, a sixth preset position, or a seventh preset position, wherein
information of the first preset position is configured to identify whether a node supports a slice capability;
information of the second preset position is configured to identify whether the node supports a flow identification capability;
information of the third preset position is configured to identify whether the node supports an intent capability;
information of the fourth preset position is configured to identify whether the node supports IOAM information;
information of the fifth preset position is configured to identify whether the node supports coloring information;
information of the sixth preset position is configured to identify whether the node supports a multi-purpose entropy label capability; and
information of the seventh preset position is configured to identify whether the node supports application information.

63. A network node, comprising:
a first storage module having a first computer-executable program stored thereon; and
at least one first processor which, when calling the first computer-executable program, implements the information processing method according to any one of claims 1 to 31.

64. A head node, comprising:
a second storage module having a second computer-executable program stored thereon; and
at least one second processor which, when calling the second computer-executable program, implements the generation method according to any one of claims 49 to 62.

65. A controller, comprising:
a third storage module having a third computer-executable program stored thereon; and
at least one third processor which, when calling the third computer-executable program, implements the method according to any one of claims 32 to 48.

66. A computer-readable storage medium having a computer-executable program stored thereon which, when called, causes the method according to any one of claims 1 to 62 to be implemented.
